(19) Europäisches Patentamt
European Patent Office
Office européen des brevets

(11) **EP 1 039 626 B1**

(12) **EUROPÄISCHE PATENTSCHRIFT**

(45) Veröffentlichungstag und Bekanntmachung des Hinweises auf die Patenterteilung:
**08.08.2007   Patentblatt 2007/32**

(51) Int Cl.:
***H02P 21/00*** *(2006.01)*

(21) Anmeldenummer: **00105744.7**

(22) Anmeldetag: **17.03.2000**

(54) **Verfahren und Vorrichtung zur Vermeidung eines stationären Betriebes innerhalb eines unzulässigen Statorfrequenzbereiches einer drehgeberlosen, feldorientiert betriebenen Drehfeldmaschine**

Method and device for avoiding the stationary operation within a forbidden range of stator frequencies of a field-orientated driven turning-field motor without a mechanical rotary transducer

Dispositif et procédé pour éviter l'opération stationnaire dans une bande de frequences statoriques interdite d'un moteur à champ tournant commandé par orientation de champ et dépourvu de capteur mécanique de rotation

(84) Benannte Vertragsstaaten:
**AT CH DE FR IT LI**

(30) Priorität: **25.03.1999   DE 19913624**

(43) Veröffentlichungstag der Anmeldung:
**27.09.2000   Patentblatt 2000/39**

(73) Patentinhaber: **SIEMENS AKTIENGESELLSCHAFT 80333 München (DE)**

(72) Erfinder:
• **Depenbrock, Manfred, Prof.**
  **44797 Bochum (DE)**
• **Koch, Stefan, Dr.**
  **91466 Gerhardshofen (DE)**

(56) Entgegenhaltungen:
DE-A- 2 131 780          DE-A- 19 506 006
DE-A- 19 524 654        DE-A- 19 532 149
US-A- 5 610 485

EP 1 039 626 B1

**Beschreibung**

Die Erfindung bezieht sich auf Verfahren und Vorrichtung zur Vermeidung eines stationären Betriebes einer drehgeberlosen, feldorientiert betriebenen Drehfeldmaschine innerhalb eines unzulässigen Statorfrequenzbereiches.

Aus der deutschen Offenlegungsschrift 197 03 248 ist ein Verfahren und eine Vorrichtung zur Bestimmung einer Drehzahl einer drehgeberlosen, feldorientiert betriebenen Drehfeldmaschine bekannt, wobei mittels einer Signalverarbeitung, die unter anderem ein vollständiges Maschinenmodell und einen Modulator enthält, in Abhängigkeit eines Fluß-Sollwertes, eines Drehmoment-Sollwertes, eines Zwischenkreis-Spannungswertes, gemessener Stromrichter-Ausgangsspannungswerte und Systemparameter einerseits Steuersignale für den Pulsstromrichter der Drehfeldmaschine und andererseits ein Statorstrom-Modellraumzeiger, ein komplexer Raumzeiger der Stator- und Rotorflußverkettung und ein konjugiert komplexer Raumzeiger der Rotorflußverkettung berechnet werden. Der Statorstrom-Modellraumzeiger und -Istraumzeiger werden jeweils normiert und anschließend miteinander verglichen. Ein daraus resultierender Differenzstrom-Raumzeiger wird betriebspunktabhängig aufbereitet und anschließend in das vom konjugiert komplexen Raumzeiger der Rotorflußverkettung bestimmte Koordinatensystem transformiert. Der Imaginäranteil dieses aufbereiteten transformierten Differenzstromraumzeigers wird mittels eines Ausgleichsreglers zu Null geregelt. Am Ausgang des Ausgleichsreglers steht eine identifizierte Drehzahl an, die der Signalverarbeitung zugeführt ist.

Eine Drehzahlermittlung einer Drehfeldmaschine aus ihren Statorströmen ist nicht möglich, wenn die Drehfeldmaschine mit sehr kleinen Statorfrequenzen und konstantem Statorflußbetrag betrieben wird, wobei keine Zusatzinformationen durch Nichtlinearitäten oder Unsymmetrien der Drehfeldmaschine zur Verfügung stehen. Nichtlineare und nichtideale Effekte, wie z.B. Nutung, Exzentrizität, Sättigungspolbildung, werden bei leistungsstarken Maschinen soweit wie technisch möglich unterdrückt. In der Praxis kann dies dazu führen, daß eine drehgeberlose, feldorientiert betriebene Drehfeldmaschine bei sehr langsamen Reversiervorgängen innerhalb eines Frequenzbereiches um Statorfrequenz Null (stationär unzulässiger Statorfrequenzbereich) beispielsweise im Betriebspunkt mit Statorfrequenz Null einrastet. Die Drehfeldmaschine verhält sich dann wie eine Wirbelstrombremse und ihre Schlupffrequenz entspricht dem invertierten Wert ihrer Drehzahl. Steigt die Drehzahl trotz des auftretenden Bremsmoments weiter an, wie es beispielsweise bei einem im Gefälle bremsenden Fahrzeug oder bei einem Kran mit angehängter Last der Fall sein könnte, kippt die Asynchronmaschine, und das Bremsmoment wird mit weiter steigender Drehzahl immer kleiner, wobei gleichzeitig der Statorflußbetrag sinkt. In diesem Betriebsbereich mit sehr großem Schlupf ist der Statorstrom der Maschinen nahezu unabhängig von der Drehzahl, deshalb schlägt die Drehzahlidentifikation weiterhin fehl, auch wenn jetzt schnelle Drehzahländerungen auftreten.

Um ein betriebssicheres Verhalten der Drehzahlidentifikation im Bereich kleiner Statorfrequenzen zu gewährleisten, ist aus der deutschen Offenlegungsschrift 196 46 457 ein Verfahren und eine Vorrichtung zur Bestimmung einer Drehzahl einer drehgeberlosen, feldorientiert betriebenen Drehfeldmaschine bekannt. In einem Frequenzbereich der Modellstatorfrequenz um Frequenz Null (stationärer unzulässiger Statorfrequenzbereich) wird der Signalverarbeitung ein niederfrequent moduliertes Flußbetragssignal zugeführt. Die Amplitude dieser Statorflußbetragsmodulation wird dabei so festgelegt, daß das mit dem niedrigsten Wert des modulierten Statorflusses erreichbare Drehmoment immer noch höher ist als das beispielsweise in der Traktion bei diesen Statorfrequenzen üblicherweise geforderte maximale Drehmoment bei Nennstatorfluß. Die Frequenz der Flußbetragsmodulation muß dabei zur Vermeidung von Torsionsschwingungen so gewählt werden, daß sie deutlich kleiner als die niedrigste mechanische Resonanzfrequenz des Antriebsstranges ist. Dieser liegt beispielsweise in der Traktion für Hochleistungslokomotiven im Bereich von 20 Hz. Ferner sollten Stromverdrängungseffekte im Rotor vermieden werden. Aus diesen Gründen ist es zweckmäßig, z.B. für die Frequenz der Flußbetragsmodulation 5 Hz zu wählen. Im Falle einer Differenz zwischen der identifizierten Drehzahl und der Drehzahl der Drehfeldmaschine tritt aufgrund der Statorflußbetragsmodulation eine von Null verschiedene Regelabweichung der Momenten-Blindgrößen in den parallel zur Transformationsgröße gerichteten Statorströmen zwischen Modell und Maschine auf, die dabei einer mit Flußmodulationsfrequenz schwingenden Wechselgröße entspricht. Der Spitzenwert dieser Wechselgröße hängt dabei zum einen von der gewählten Amplitude und der Frequenz der Statorflußbetragsmodulation ab, aber zum anderen auch maßgeblich von der Drehzahlabweichung zwischen Maschine und Modell. Je größer der Drehzahlfehler ist, um so größer ist der auftretende Spitzenwert der Regelabweichung der Momenten-Blindgrößen, so daß der Spitzenwert eine zusätzliche Information zur Drehzahlermittlung liefert. Die Information über das Vorzeichen der Drehzahlabweichung ist hier noch nicht enthalten.

Eine auftretende Regelabweichung der Momenten-Wirkgrößen, die im Fall einer Drehzahldifferenz zwischen Modell und Maschine bei Flußbetragsmodulation ebenfalls einer mit der Modulationsfrequenz pulsierenden Wechselgröße entspricht, wird durch den Ausgleichsregler der Vorrichtung ausgeregelt und als pulsierende Drehzahl interpretiert. Diese beobachtete Drehkreisfrequenz setzt sich dann im allgemeinen aus einem Gleichanteil (Mittelwert) und einem überlagerten Wechselanteil zusammen. Der Wechselanteil, der der identifizierten mittleren Drehzahl überlagert ist, eilt in Abhängigkeit von der auftretenden Drehzahldifferenz zwischen Modell und Maschine der auftretenden Regelabweichung der Momenten-Blindgrößen einmal nach und einmal vor. Das Vorzeichen dieses Phasenwinkels zwischen dieser Regelabweichung der Momenten-Blindgrößen und dem überlagerten Wechselanteil der beobachteten Drehkreisfrequenz, der über eine Periode der Statorflußbetragsmodulation mit bekannten Methoden ermittelt wird, liefert somit in eindeutiger Weise die Information, ob die identifizierte Drehzahl zu groß oder zu klein ist. Ist dieser Phasenwinkel kleiner Null, so eilt der Wechselanteil der beobachteten Drehkreisfrequenz der Regelabweichung der Momenten-Blindgrößen nach. Daraus folgt, daß diese beobachtete Drehkreisfrequenz erhöht werden muß. Ist der Winkel größer Null, so eilt der überlagerte Wechselanteil der beobachteten Drehkreisfrequenz der Regelabweichung der Momenten-Blindgrößen vor, wodurch die beobachtete Drehkreisfrequenz erniedrigt werden muß. Der ermittelte Spitzenwert der Regelabweichung der Momenten-Blindgrößen ist ein Maß für die vorhandene absolute Abweichung zwischen der identifizierten Drehzahl und der Maschinendrehzahl, so daß mit Hilfe des Ausgleichsreglers der Vorrichtung die Wechselgröße dieser Regelabweichung der. Momenten-Blindgrößen ausgeregelt werden kann, wobei das Vorzeichen des Phasenwinkels den Regelsinn bestimmt.

Aus DE 195 32 149 A1 war bereits ein Verfahren zur Erfassung der Rotorlage über die Bestimmung der Flußrichtung bekannt. Bei diesem Verfahren wird dem Sollwert für die feldgebende Stromkomponente ein Stromtestsignal mit zeitlich wechselndem Verlauf aufaddiert, wobei die feldgebende Stromkomponente bis in den Sättigungsbereich angehoben wird. Erfaßt wird der zeitliche Verlauf der Spannungskomponenten des tänderspannungsvektors. Aufgrund des unsymmetrischen Übertragungsverhaltens im gesättigten Bereich ist die Berechnung des Flußvektors aus dem Ständerspannungsvektor möglich.

Bei der Drehzahlidentifikation mit Modulation des Statorflußbetrages bei niedrigen Statorfrequenzen ist ein Betrieb der Drehfeldmaschine mit Statorfrequenz Null möglich. Jedoch kann nicht gewährleistet werden, daß keine ungewollten Pulsationen des Drehmomentes auftreten.

Der Erfindung liegt nun die Aufgabe zugrunde, ein Verfahren und eine Vorrichtung zur Vermeidung eines stationären Betriebes einer drehgeberlosen, feldorientiert betrieben Drehfeldmaschine innerhalb eines unzulässigen Statorfrequenzbereich anzugeben, wobei auf die Verwendung eines niederfrequent modulierten Testsignals verzichtet werden kann.

Diese Aufgabe wird erfindungsgemäß mit den Merkmalen des Anspruchs 1 bzw. 13 gelöst.

Das erfindungsgemäße Verfahren basiert auf der Tatsache, daß ein gefordertes Drehmoment bei unterschiedlichen Statorflußbeträgen und daraus resultierend unterschiedlichen Schlupffrequenzen erzeugt werden kann. Diese Tatsache wird dazu verwendet, daß mittels des erfindungsgemäßen Verfahrens eine Betriebsführung der Drehfeldmaschine erreicht wird, die einen stationären Betrieb der Drehfeldmaschine innerhalb eines vorbestimmten Statorfrequenzbereichs nicht zuläßt.

Die wesentlichen Verfahrensschritte des erfindungsgemäßen Verfahrens sind der sprungförmige Abbau eines Flußbetrages der Statorflußverkettung mit anschließendem kontinuierlichen Aufbau dieses Flußbetrages bei konstanter Statorfrequenz bzw. der kontinuierliche Abbau des Flußbetrages der Statorflußverkettung bei konstanter Statorfrequenz mit anschließendem sprungförmigen Aufbau dieses Flußbetrages. Ob man mit dem sprungförmigen Abbau oder dem kontinuierlichen Abbau des Flußbetrages der Statorflußverkettung beginnt, hängt davon ab, in welchem Betriebszustand sich das Drehfeld der Drehfeldmaschine befindet. Beim generatorischen Betrieb beginnt man mit dem sprungförmigen Abbau, wogegen beim motorischen Betrieb mit dem kontinuierlichen Abbau des Flußbetrages begonnen wird. Dieser Abbau des Flußbetrages findet jedoch erst dann statt, wenn z.B. bei konstantem Drehmoment der Betrag einer identifizierten Drehzahl abnimmt und wenn der Betrag der Statorfrequenz gleich einem vorbestimmten Grenzwert eines unzulässigen Statorfrequenzbereiches ist.

Dadurch, daß im generatorischen Betrieb bei einer Statorfrequenz gleich einer negativen vorbestimmten Statorgrenzfrequenz der Flußbetrag von einem maximalen Flußbetrag, beispielsweise Nennflußbetrag, auf einen minimalen Flußbetrag sprungförmig geändert wird, wird der Bereich unzulässig kleiner Statorfrequenzen so schnell durchfahren, daß ein "Hängenbleiben" der Drehzahlidentifikation bei Statorfrequenz Null sicher vermieden wird.

Dieser Abbau des Flußbetrages erfolgt im Vergleich zu den mechanischen Zeitkonstanten des Antriebs nahezu sprungartig, weswegen dieser Verfahrensschritt als "Sprung" bezeichnet wird, aber im Vergleich zur Streuzeitkonstanten der Drehfeldmaschine so langsam, daß die für stationären Betrieb geltenden Beziehungen noch brauchbare Näherungen darstellen.

Der Wert des minimalen Flußbetrages sollte so gewählt werden, daß die Schlupffrequenz kleiner als die Schlupffrequenz im Kippunkt bleibt. Wird ein derartiger niedriger Flußbetrag gewählt, so ist normalerweise der Betrag der zugehörigen Statorfrequenz größer als die Statorgrenzfrequenz. Wenn ein bestimmtes Drehmoment mit kleinerem Flußbetrag erzeugt werden soll, dann verursacht ein derartig niedriger Flußbetrag bei großen Drehmomenten einen unnötig höheren Statorstrom.

Bei einer vorteilhaften Ausführungsform des erfindungsgemäßen Verfahrens wird der Flußbetrag nur so weit verringert, daß der Wert des Statorfrequenzbetrages größer oder gleich einer vorbestimmten Statorgrenzfrequenz ist.

Im Zustand dieses minimalen Flußbetrages ist der Betrag der Schlupffrequenz um den zweifachen Wert der Statorgrenzfrequenz erhöht, der Betrag der Statorfrequenz ist gleich der positiven Statorgrenzfrequenz und das Drehmoment unverändert. Beim weiteren Ändern der identifizierten Drehzahl wird nun der Flußbetrag wieder bei konstanter Statorfrequenz erhöht. Dies gewährleistet einen Betrieb mit jeweils maximal möglichem Flußbetrag. Dabei ist der Betrag der Statorfrequenz gleich der positiven Statorgrenzfrequenz. Ein Betrag der Statorfrequenz größer als die positive Statorgrenzfrequenz würde eine Vergrößerung des Betrags Schlupffrequenz um den gleichen Wert bedeuten und bei einem konstanten Moment eine unnötige Flußschwächung erfordern. Wird nach Erreichen des vorbestimmten maximalen Flußbetrages der Betrag der Drehzahl weiter erhöht, arbeitet die Drehfeldmaschine in einem regulären Motorbetrieb mit vollem Statorflußbetrag.

Bei einem Ausgangspunkt der Drehzahl einer Drehfeldmaschine, die sich im motorischen Betrieb befindet, verläuft die Flußbetragsvariation umgekehrt zu der oben beschriebenen Flußbetragsvariation. Das heißt, sobald der Betrag der Statorfrequenz bei Absinken des Betrags der Drehzahl gleich der positiven Statorgrenzfrequenz wird, wird der Flußbetrag auf den Flußbetrag bei konstanter Statorfrequenz abgesenkt. Während dieser Flußbetragsverringerung wird ständig überprüft, ob ein sprungförmiger Flußbetragsaufbau schon zulässig ist. Dieser sprungförmige Flußbetragsaufbau, auch als "Rücksprung" bezeichnet, ist genau dann zulässig, wenn das Vorzeichen der Statorfrequenz bei unverändertem Betrag der Statorfrequenz, bei unveränderter Drehzahl, bei unverändertem Drehmoment und bei maximalem Flußbetrag gewechselt werden kann. Wird diese Rücksprungbedingung erfüllt, so wird der Flußbetrag sprungförmig auf den maximalen Flußbetrag erhöht. Bei dieser sprungförmigen Flußbetragserhöhung durchläuft die Statorfrequenz den Bereich unzulässig kleiner Statorfrequenzen so schnell, daß die Drehzahlidentifikation bei Statorfrequenz Null nicht hängen bleiben kann. Bei der Statorfrequenz mit gewechseltem Vorzeichen und dem Betrag gleich der positiven Statorgrenzfrequenz befindet sich die Drehfeldmaschine im Betrieb mit unterschiedlichen Vorzeichen von Schlupf- und Statorfrequenz.

Bei einer vorteilhaften Ausführungsform des erfindungsgemäßen Verfahrens wird beim Vorzeichenwechsel die Statorfrequenz mit einem Hysteresewert betragsmäßig erhöht. Dadurch wird erreicht, daß, nachdem der Rücksprung ausgeführt ist, nicht sofort wieder ein Sprung ausgeführt wird. Während des Rücksprungs bzw. des Sprungs soll sich die Drehzahl der Drehfeldmaschine so langsam ändern, daß diese als konstant angesehen werden kann. Damit man diese Hysterese erhält, wird der Rücksprung nicht bei einem vorbestimmten minimalen Flußbetrag eingeleitet, sondern bei einem Flußbetrag, der um den Hysteresewert kleiner ist. Das heißt, der Flußaufbau beginnt bei einer Schlupffrequenz mit vergrößertem Betrag im Vergleich zum Rücksprung ohne Hysterese (idealer Grenzfall).

Mit diesem erfindungsgemäßen Verfahren (Flußbetragsvariation) wird ein Versagen der Drehzahlidentifikation im Bereich kleiner Statorfrequenzen vermieden, sofern der Betrag des Drehmoments einen Minimalwert nicht unterschreitet. Dieses erfindungsgemäße Verfahren ist gegenüber dem bekannten Verfahren (Flußbetragsmodulation) einfacher und aufwandsärmer und es sind keine Zusatzanforderungen an Meßeinrichtungen oder Eigenschaften der Drehfeldmaschine zu stellen. Wie groß das erforderliche Minimalmoment und damit der Bereich unzulässiger Betriebspunkte bei kleinen Drehzahlen ist, hängt davon ab, wie klein die Statorfrequenz ist, bei der noch ein stationärer Betrieb möglich ist, und welche minimalen Flußbeträge realisierbar sind.

Weitere Ausgestaltungen des erfindungsgemäßen Verfahrens sind den Unteransprüchen 4 bis 12 zu entnehmen.

Die Vorrichtung zur Vermeidung eines stationären Betriebes einer drehgeberlosen, feldorientiert betriebenen Drehfeldmaschine innerhalb eines unzulässigen Statorfrequenzbereiches weist eine Ablaufsteuerung, eine Statorfrequenz-Regelung, einen Umschalter und eine Flußbetragsregelung auf. Die Statorfrequenz-Regelung ist mittels des Umschalters mit der Flußbetragsregelung verbunden, wobei der zweite Eingang des Umschalters mit einem Ausgang der Ablaufsteuerung verbunden ist. Ein Steuerausgang der Ablaufsteuerung ist mit einem Steuereingang des Umschalters verknüpft. Mit Hilfe der Ablaufsteuerung wird ermittelt, ob das Drehfeld der Drehfeldmaschine sich im generatorischen oder motorischen Betrieb befindet, ob der Betrag der identifizierten Drehzahl abnimmt und ob der Betrag der Statorfrequenz gleich einem Betrag einer Statorgrenzfrequenz ist. In Abhängigkeit dieser Ergebnisse ist der Ausgang der Statorfrequenz-Regelung mit dem Eingang der Flußbetragsregelung verbunden oder nicht. Ist der Ausgang der Statorfrequenz-Regelung nicht mit der Flußbetragsregelung verbunden, so gibt die Ablaufsteuerung der Flußbetragsregelung den regulären Flußbetrag vor. Die Ablaufsteuerung steuert ebenfalls den "Sprung" und den "Rücksprung" des Flußbetrages.

Somit kann man mit einfachen Mitteln verhindern, daß eine drehgeberlose, feldorientiert betriebene Drehfeldmaschine stationären innerhalb eines unzulässigen Statorfrequenzbereiches betrieben wird. Mit dieser Vorrichtung wird der Bereich unzulässig kleiner Statorfrequenzen schnell durchfahren, in dem ein vorhandener Flußbetrag sprungförmig oder kontinuierlich abgebaut und anschließend wieder kontinuierlich oder sprungförmig aufgebaut wird.

Weitere Ausgestaltungen der erfindungsgemäßen Vorrichtung sind den Unteransprüchen 14 bis 15 zu entnehmen.

Zur weiteren Erläuterung der Erfindung wird auf die Zeichnung Bezug genommen, in der ein Ausführungsbeispiel einer Vorrichtung zur Vermeidung eines stationären Betriebes einer drehgeberlosen, feldorientiert betriebenen Drehfeldmaschine innerhalb eines unzulässigen Statorfrequenzbereiches schematisch veranschaulicht ist.

FIG 1      zeigt in einem Diagramm die Schlupffrequenz als Funktion der Drehkreisfrequenzzahl bei einem Reversiervorgang mit konstantem Drehmoment und Flußbetragsvariation, in der

FIG 2 ist in einem Diagramm das Quadrat des Flußbetrages über dem Drehmoment jeweils bezogen auf das Quadrat des maximalen Flußbetrages dargestellt, die

FIG 3 zeigt eine Ablaufsteuerung zur erfindungsgemäßen Flußbetragsvariation, die

FIG 4 zeigt ein Blockschaltbild eines Teils der Vorrichtung zur Vermeidung eines stationären Betriebes einer drehgeberlosen, feldorientiert betriebenen Drehfeldmaschine innerhalb eines unzulässigen Statorfrequenzbereiches und in den

FIG 5 bis 7 sind jeweils in einem Diagramm Meßergebnisse dargestellt, die mit dem erfindungsgemäßen Verfahren zur Flußbetragsvariation an einem Versuchsstand erzielt worden sind.

Bei den nachfolgenden Erläuterungen werden bezogene Größen verwendet. Diese Größen erhält man dadurch, daß durch eine entsprechende Bezugsgröße dividiert wird. Als Bezugsgröße werden gewählt:

$\Psi^*$ = Bezugswert für Flußgrößen, definiert als Betrag des Raumzeigers der Statorflußverkettung bei Betrieb mit Nennfluß.

$\omega^* = \omega_\sigma = R_r/L_\sigma$ = Bezugswert für Kreisfrequenzen und Winkelgeschwindigkeiten

Diese Bezugsgrößen sind durch den Index * am Formelzeichen gekennzeichnet. Als Formelbuchstaben für bezogene Größen werden gewählt:

$$\Psi_{\ldots}/\Psi_* = \psi_{\ldots} \qquad \omega_{\ldots}/\omega_* = \omega_{\ldots}/\omega_\sigma = n_{\ldots}$$

Stationäre Signale sind durch eine Überschreibung mit dem Zeichen " ~ " gekennzeichnet. Stationär gilt zwischen der für eines der p Polpaare gerechneten Winkelgeschwindigkeit $\omega$ des Rotors und den Kreisfrequenzen der Stator- und Rotorgrößen

$$\tilde{\omega}_s = \tilde{\omega}_r + \omega .$$

Der Betrag $|\tilde{\underline{\Psi}}\mu|$ des Raumzeigers der bezogenen Statorflußverkettung wird mit $\gamma$ bezeichnet. Außerdem sind noch folgende bezogene Größen definiert:

$$m = \frac{M_d/p}{M_\sigma} = 2 \cdot \left|\underline{\psi}_r\right|^2 \cdot n_r ;$$

$M_\sigma$ = Kippmoment pro Polpaar bei $\gamma = 1$; $n_r = 1$

$$\tilde{m} = 2 \cdot \gamma^2 \cdot \cos^2 \tilde{\vartheta} \cdot \tilde{n}_r ;$$

$\tilde{\vartheta}$ = Winkel zwischen den Raumzeigern der Flußverkettung von Stator und Rotor

$$\tan \tilde{\vartheta} = \tilde{\omega}_r \cdot L_\sigma/R_r = \tilde{n}_r ; \qquad \cos^2 \tilde{\vartheta} = 1/\left[1 + \tilde{n}_r^2\right]$$

Die wichtigsten Beziehungen für die folgenden Überlegungen ergeben sich dann zu:

$$\tilde{n}_r = -n + \tilde{n}_s \qquad\qquad (1)$$

$$\tilde{m}/\gamma^2 = 2 \cdot \tilde{n}_r / \left| 1 + \tilde{n}_r^2 \right| \qquad\qquad (2)$$

Im folgenden wird der Einfachheithalber der Zusatz "bezogen" bei allen Größen weggelassen. Ferner werden minimale Größen durch eine Überschreibung mit dem Zeichen " ∪ " und maximale Größen durch eine Überschreibung mit dem Zeichen " ∩ " gekennzeichnet. Nur in Grenzfällen realisierbare maximale bzw. minimale Größen sind durch eine Überschreibung mit dem Zeichen "∪" bzw. " ∪ " gekennzeichnet. Mit dem Index r bzw. s sind rotorseitige bzw. statorseitige Größen gekennzeichnet.

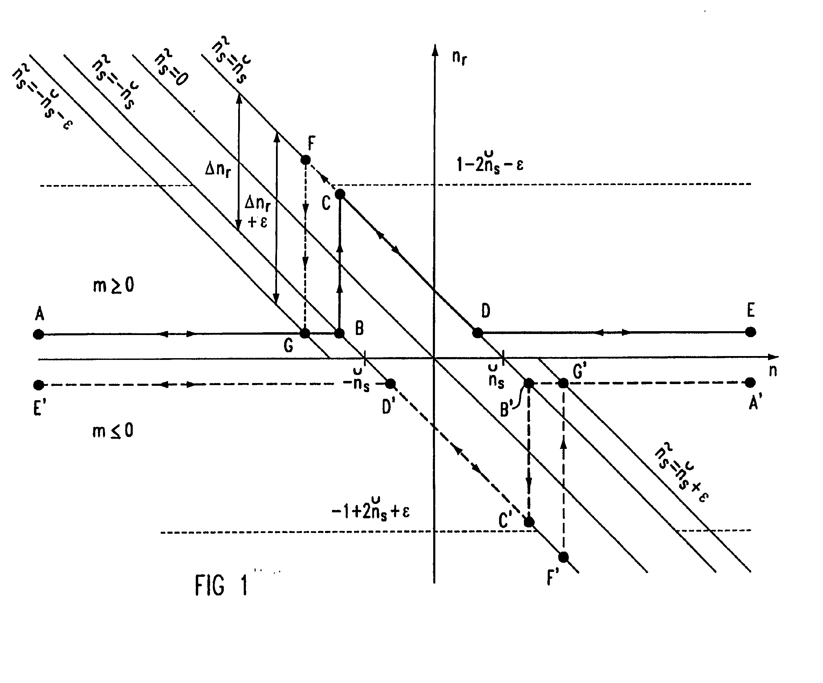

In der FIG 1 ist der Schlupffrequenzfaktor $n_r$, der auch als Rotorkreisfrequenzfaktor bzw. als Rotorschlupffrequenz bezeichnet wird, als Funktion der Drehkreisfrequenzzahl n bei einem Reversiervorgang mit konstantem Drehmoment m größer Null und Flußbetragsvariation in einem Diagramm dargestellt. Außerdem ist in diesem Diagramm die Schlupffrequenz $n_r$ als Funktion der Drehkreisfrequenzzahl n bei einem Reversiervorgang mit konstantem Drehmoment m kleiner Null und Flußbetragsvariation dargestellt (unterbrochene Linie). In diesem Diagramm ist jedem Punkt in der ($n;n_r$)-Ebene ein stationärer Arbeitspunkt der Drehfeldmaschine zugeordnet, der durch die Drehzahl und die Rotorschlupffrequenz gekennzeichnet ist. Diese Rotorschlupffrequenz $n_r$ ist gemäß Gleichung (2) auch ein Maß für das auf das Quadrat des Flußbetrages γ vom Statorflußraumzeiger bezogene Drehmoment $\tilde{m}$. Linien konstanter Statorfrequenzzahl $\tilde{n}_s$ sind in dieser ($n;n_r$)-Ebene parallele Geraden mit der Steigung -1. Soll der Betrag der stationären Statorfrequenzzahl $\tilde{n}_s$ nicht kleiner als ein Grenzwert $\tilde{n}_s$ eines vorbestimmten unzulässigen Statorfrequenzbereiches werden, so dürfen keine stationären Arbeitspunkte zwischen den Geraden

$$\tilde{n}_r = -n - \breve{n}_s ; \qquad\qquad \tilde{n}_r = -n + \breve{n}_s$$

liegen.

Die Arbeitsweise des erfindungsgemäßen Verfahren wird nun anhand des in FIG 1 dargestellten Diagramms näher erläutert. Wie bereits erwähnt, zeigt das Diagramm gemäß FIG 1 beispielhaft einen Reversiervorgang der Drehzahl bei konstantem positiven Drehmoment m (fett ausgezogene Linie). Eine drehgeberlose, feldorientiert betriebene Drehfeldmaschine ist in der nationalen Offenlegungsschrift 197 03 248 näher erläutert und dargestellt. Es wird bei dieser drehgeberlosen, feldorientiert betriebenen Drehfeldmaschine davon ausgegangen, daß die verwendete Drehzahlidentifikation bis zu einer minimalen Statorfrequenzzahl ± $\tilde{n}_s$, die die Grenzwerte eines unzulässigen Statorfrequenzbereich kennzeichnen, einwandfrei arbeitet, so daß stationäre Betriebspunkte mit -$\tilde{n}_s$<$\tilde{n}_s$<+$\tilde{n}_s$ vermieden werden müssen.

Soll beispielsweise ausgehend von einem negativen Wert der Drehkreisfrequenzzahl n und bei maximalem Flußbetrag $\tilde{\gamma}$ die Drehfeldmaschine durch ein konstantes positives Drehmoment m reversiert werden, so laufen die Vorgänge wie folgt ab:

Unter dieser Voraussetzung befindet sich die Drehfeldmaschine zunächst im Betriebspunkt A (generatorischer Betrieb). Auf der Trajektorie vom Betriebspunkt A zum Betriebspunkt B bleibt bei konstantem Drehmoment und konstantem Flußbetrag $\hat{\gamma}$ auch die Schlupffrequenzzahl $\tilde{n}_r$ konstant, während der Betrag der Drehkreisfrequenzzahl n langsam abnimmt. Der Betrag der Statorfrequenzzahl $\tilde{n}_s$ nimmt ebenfalls langsam ab, bis im Betriebspunkt B die negative Statorgrenzfrequenzzahl -$\breve{n}_s$ erreicht wird. Um den Bereich unzulässig kleiner Statorfrequenzzahlen $n_s$ zwischen den Statorgrenzfrequenzzahlen -$\breve{n}_s$ und +$\breve{n}_s$ zu vermeiden, wird die bei maximalem Flußbetrag $\hat{\gamma}$ aufgetretene Schlupffrequenzzahl $n_{rA}$ um den Wert $\Delta n_r = 2 \cdot \breve{n}_s$ auf eine größere Schlupffrequenzzahl $n_{rC} = n_{rA} + 2 \cdot \breve{n}_s$ erhöht. Dies erfolgt im Vergleich zu den mechanischen Zeitkonstanten des Antriebs nahezu sprungartig, aber im Vergleich zur Streuzeitkonstanten der Drehfeldmaschine so langsam, daß die für den stationären Betrieb geltenden Beziehungen noch brauchbare Näherungen darstellen.

Gemäß Gleichung (2) muß bei konstantem Moment dann der Flußbetrag γ vergleichsweise schnell auf einen vorbestimmten Wert $\breve{\gamma}_C$ reduziert werden, der kleiner als der maximale Flußbetrag $\hat{\gamma}$ ist. Dieser Vorgang wird im folgenden als "Sprung" bezeichnet. Beim "Sprung" vom Betriebspunkt B zum Betriebspunkt C wird der Bereich $-\breve{n}_s <$ ñ$_s$ < $+\breve{n}_s$ stationär unzulässig kleiner Statorfrequenzzahlen n$_s$ so schnell durchfahren, daß eine verwendete Drehzahlidentifikation nicht bei Statorfrequenzzahl n$_s$ = 0 hängen bleiben kann. Beim Durchfahren dieses unzulässigen Bereiches $-\breve{n}_s$ < ñ$_s$ < $+\breve{n}_s$ hat die Statorfrequenzzahl n$_s$ kurzzeitig den Wert Null. Beim weiteren Absinken der Drehkreisfrequenzzahl n wird verfahrensgemäß die Trajektorie C-D bei konstanter Statorfrequenzzahl ñ$_s$ = $+\breve{n}_s$ durchlaufen. Dies gewährleistet einen Betrieb mit jeweils maximal möglichem Flußbetrag γ, denn jede Erhöhung der Statorfrequenzzahl n$_s$ über die minimale Statorfrequenzzahl $\breve{n}_s$ hinaus, würde nach Gleichung (1) eine Vergrößerung der stationären Schlupffrequenz ñ$_r$ um den gleichen Wert bedeuten und gemäß der Gleichung (2) bei konstantem Moment eine unnötige Flußschwächung erfordern.

Auf der Trajektorie vom Betriebspunkt C zum Betriebspunkt D sinkt die Schlupffrequenzzahl ñ$_r$ = -n + $\breve{n}_s$ ständig. Gemäß Gleichung (2) muß bei konstantem Moment der Flußbetrag entsprechend vergrößert werden. Im Betriebspunkt D wird mit γ = $\hat{\gamma}$ der vorbestimmte Höchstwert des Flußbetrages γ erreicht. Die weitere Erhöhung der Drehkreisfrequenzzahl n hat das Durchlaufen der Trajektorie D-E bei konstantem Flußbetrag $\hat{\gamma}$ zur Folge.

Beim sprungförmigen Flußabbau kann der Flußbetrag γ auch kleiner als der Flußbetrag $\breve{\gamma}_C$ gewählt werden. Einzige Bedingung, die erfüllt werden muß, ist die, daß die Schlupffrequenzzahl ñ$_r$ kleiner als Eins bleiben muß. Wenn der Flußbetrag γ auf einen Flußbetrag γ < $\breve{\gamma}_C$ abgesenkt wird, ergibt sich ein Betriebspunkt oberhalb des Betriebspunktes C. Dies ist jedoch im allgemeinen nicht sinnvoll, da zumindest bei größeren Drehmomenten der Statorstrom steigt, wenn ein bestimmtes Drehmoment mit kleinerem Flußbetrag γ erzeugt wird. Aus diesen Gründen wird der Flußbetrag γ nur soweit verringert, daß die Bedingung |n$_s$| $\geq \breve{n}_s$ gerade noch erfüllt ist.

Wenn der Betriebspunkt E erreicht ist, kann infolge einer Erhöhung des Belastungsmomentes die Drehkreisfrequenzzahl n wieder absinken. Dadurch wandert der Betriebspunkt der Drehfeldmaschine auf der Trajektorie E-D zum Punkt D bei konstantem Flußbetrag $\hat{\gamma}$. Im Betriebspunkt D ist die Statorfrequenzzahl n$_s$ gleich der positiven Statorgrenzfrequenzzahl $+\breve{n}_s$. Sinkt die Drehkreisfrequenzzahl n weiter ab, so wird der Flußbetrag γ bei konstanter Statorfrequenzzahl n$_s$ kontinuierlich verringert. Dabei wandert der Betriebspunkt der Drehfeldmaschine vom Punkt D auf der Trajektorie D-C in Richtung auf den Punkt C. Um zu erkennen, wann es zulässig ist, die Statorfrequenzzahl ñ$_s$ = $+\breve{n}_s$ auf ñ$_s$ = $-\breve{n}_s$ zu ändern, muß beim Betrieb auf der Trajektorie D-C mit ñ$_s$ = $+\breve{n}_s$ verfahrensgemäß ständig berechnet werden, ob durch Erhöhen des Flußbetrages γ auf den Wert $\hat{\gamma}$ bei unverändertem Moment und bei der aktuellen Drehkreisfrequenzzahl n sich ein Betrag der Statorfrequenzzahl n$_s$ ergeben würde, der gleich der Statorgrenzfrequenzzahl $\breve{n}_s$ ist. Ist diese Bedingung erfüllt, wird der Flußbetrag γ im Vergleich zu den mechanischen Zeitkonstanten sehr schnell auf den maximalen Flußbetrag $\hat{\gamma}$ erhöht. Dieser Vorgang wird wie bereits erwähnt als "Rücksprung" bezeichnet. Die Bedingung, die erfüllt werden muß, damit der Rücksprung stattfindet, wird im folgenden als "Rücksprungbedingung" bezeichnet. Die Rücksprungbedingung in dem Diagramm gemäß FIG 1 ist beim Durchlaufen der Trajektorie ñ$_s$ = $+\breve{n}_s$ mit sinkender Drehkreisfrequenzzahl n erstmals im Punkt C erfüllt.

Durch den Rücksprung würde der Betriebspunkt B auf der Trajektorie B-A erreicht. Da in diesem Betriebspunkt B gerade die Sprungbedingung erfüllt wird, könnte der Arbeitspunkt durch Absenken des Flußbetrags γ gleich wieder auf die Trajektorie ñ$_s$=$+\breve{n}_s$ springen. Ob im Betriebspunkt B der Flußbetrag γ gleich wieder sprungförmig abgebaut wird, hängt davon ab, wie schnell die Drehkreisfrequenzzahl n durch ein größeres Lastmoment absinkt. Damit der Arbeitspunkt nicht ständig zwischen den Trajektorien $\tilde{n}_s = -\breve{n}_s$ und $\tilde{n}_s = +\breve{n}_s$ hin- und herspringt, wird eine Drehzahl-Hysterese $\varepsilon$ eingebaut. Infolge dieser Hysterese $\varepsilon$ ist die Rücksprungbedingung erst dann erfüllt, wenn die Statorfrequenzzahl $n_s$ nach dem Rücksprung um die Hysterese $\varepsilon$ tiefer als die negative Statorgrenzfrequenzzahl $-\breve{n}_s$ liegt. Diese Rücksprungbedingung wird beim Durchlaufen der Trajektorie $\tilde{n}_s = +\breve{n}_s$ erst beim Betriebspunkt F erfüllt. Durch den Rücksprung wird der Betriebspunkt G der Trajektorie B-A erreicht. Beim weiteren Durchlaufen der Trajektorie B-A bleibt der Flußbetrag $\gamma$ auf dem konstanten maximalen Wert $\hat{\gamma}$, wogegen der Betrag der Statorfrequenzzahl $n_s$ weiter ansteigt.

Das Verfahren wurde zuvor anhand eines Drehzahlreversiervorgangs bei konstantem Drehmoment beschrieben. Da die Ablaufsteuerung sich an der Statorfrequenz der Drehfeldmaschine orientiert, funktioniert das Verfahren auch wenn sich bei konstanter Drehzahl das Drehmoment ändert.

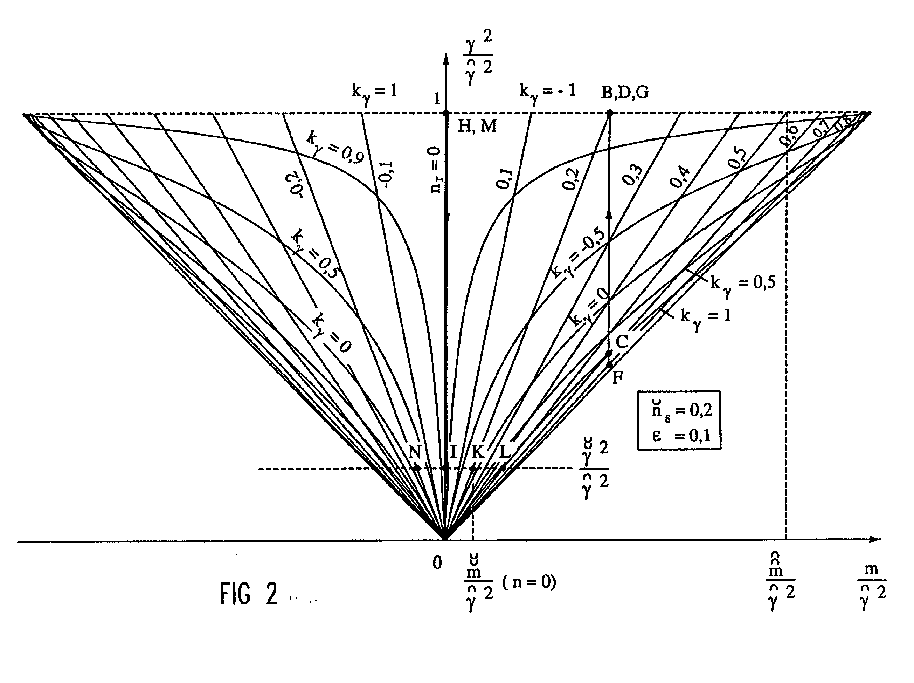

Zur Darstellung der Flußbetragsänderungen ist in der FIG 2 das Quadrat des Flußbetrags $\gamma^2$ über dem Drehmoment $m$ jeweils bezogen auf das Quadrat des maximalen Flußbetrags $\hat{\gamma}^2$ aufgetragen, wobei die Statorgrenzfrequenzzahl $\breve{n}_s = 0{,}2$ und die Hysterese $\varepsilon = 0{,}1$ fest gewählt sind. In dieser Ebene sind die Linien für konstante Schlupffrequenzzahl $n_r$ Ursprungsgeraden. Die Linien mit konstanter Statorfrequenzzahl $n_s$ beim Sprung oder Rücksprung haben den gezeigten gekrümmten Verlauf. In den Sonderfällen $k_\gamma = 1$ bei negativem Drehmoment bzw. $k_\gamma = -1$ bei positivem Drehmoment sind diese Linien waagerecht Geraden bei $\gamma^2/\hat{\gamma}^2 = 1$ und senkrechte Gerade zum Nullpunkt.

Wählt man für den Reversiervorgang wie in FIG 1 die Schlupffrequenzzahl $n_r$ bei maximalem Flußbetrag $\hat{\gamma}$ zu 0,2, stellt sich dieser hier wie folgt dar:

Im Betriebspunkt B gilt $\gamma = \hat{\gamma}$ und $k_\gamma = -1$. Der Sprung zum Betriebspunkt C führt von der Geraden $n_r = 0{,}2$ schnell senkrecht nach unten zur Geraden $n_r = 0{,}6$, wobei hier gleichzeitig $k_\gamma = 1$ gilt. Im Statorfrequenzregelbereich wird der Fluß langsam kontinuierlich erhöht, bis er im Betriebspunkt D wieder seinen Maximalwert $\hat{\gamma}$ erreicht hat. Beim Reversieren zurück in den Generatorbetrieb wird der Fluß zunächst langsam soweit geschwächt, bis im Betriebspunkt F die Gerade $n_r = 0{,}7$ erreicht wird. Der Rücksprung führt dann schnell zum Maximalfluß im Betriebspunkt G.

Wie dieser Darstellung zu entnehmen ist, führt die Begrenzung der Schlupffrequenzzahl $n_r(\hat{\gamma})$ mit folgender Bedingung:

$$\left| n_r(\hat{\gamma}) \right| \leq 1 - 2 \cdot \breve{n}_s - \varepsilon \qquad (3)$$

zu einem gerade noch realisierbaren maximalen Drehmoment $\hat{\hat{m}}/\hat{\gamma}^2$ mit $n_r(\hat{\gamma}) = 0{,}5$. Andererseits muß bei kleinen Drehmomenten der Flußbetrag $\gamma$ sehr stark geschwächt werden, um die erforderliche Variation der Schlupffrequenzzahl $n_r$ zu erreichen. Für ein Drehmoment $m = 0$ existiert ein singulärer Punkt, da hier Schlupffrequenz- und Statorfrequenzzahl $n_r$ und $n_s$ unabhängig vom Flußbetrag $\gamma$ sind. Der Drehzahlbereich $-\hat{n}_s < n < +\hat{n}_s$ ist deshalb im idealen Leerlauf ein verbotener Betriebszustand.

Der Flußbetrag $\gamma$ darf in der Praxis nicht beliebig abgesenkt werden. In die Verstärkung zwischen der Drehzahlabweichung und der Statorstromdifferenz geht der Betrag des Rotorflusses ein, wodurch die realisierbare minimale Statorgrenzfrequenzzahl $\pm\breve{n}_s$ nicht konstant ist, sondern mit sinkendem Flußbetrag $\gamma$ steigt. Deshalb muß man für den Statorflußbetrag eine untere Grenze

$$\frac{\breve{\gamma}^2}{\hat{\gamma}^2}$$

einführen. Wie die Darstellung der FIG 2 zeigt, resultiert daraus ein drehzahlabhängiges minimales Drehmoment

$$\frac{\breve{\breve{m}}}{\hat{\gamma}^2}(n).$$

Aus diesem Grund muß eine Ablaufsteuerung der Vorrichtung zur Vermeidung eines stationären Betriebes einer drehgeberlosen, feldorientiert betriebenen Drehfeldmaschine innerhalb eines vorbestimmten unzulässigen Statorfrequenzzahlbereichs $\pm \breve{n}_s$ daher neben der Flußbetragssteuerung auch dafür sorgen, daß der Drehmomentbetrag diesen Minimalwert

$$\frac{\breve{\breve{m}}}{\hat{\gamma}^2}(n)$$

nicht unterschreitet, um verbotene Betriebszustände zu vermeiden.

Betrachtet man z.B. den Stillstand der Drehfeldmaschine mit gefordertem Drehmoment m = 0, befindet sich die Drehfeldmaschine zunächst im Betriebspunkt H der FIG 2 mit maximalem Fluß $\hat{\gamma}$. Um das erforderliche Drehmoment $\breve{\breve{m}}$ so gering wie möglich zu halten, ist es sinnvoll, den Flußbetrag $\gamma$ auf seinen Minimalwert $\breve{\gamma}$ zu senken, dies entspricht in dieser Darstellung den Betriebspunkt I. Nun wird verfahrensgemäß das Drehmoment m in positiver Richtung erhöht, bis im Betriebspunkt K mit $n_r$ = 0,2 auch $n_s$ = $+\breve{n}_s$ = 0,2 erfüllt ist. Steigt die Drehkreisfrequenzzahl n, kann das Drehmoment m entsprechend verringert werden, bis bei einer Drehkreisfrequenzzahl n = 0,2 der Leerlauf erreicht ist. Sinkt dagegen die Drehkreisfrequenzzahl n auf negative Werte, muß das Drehmoment m wieder erhöht werden, wenn die Statorfrequenzzahl $n_s$ zunächst konstant auf $n_s$ = $+\breve{n}_s$ gehalten wird. Im Betriebspunkt L mit einer Drehkreisfrequenzzahl n = -0,3 und einer Schlupffrequenzzahl $n_r$ = 0,5 ist dann die Rücksprungbedingung erfüllt, und die Ablaufsteuerung setzt das Drehmoment m zu Null und erhöht den Flußbetrag $\gamma$ auf den Maximalwert $\hat{\gamma}_M$ im Betriebspunkt M.

Natürlich wäre es im zuletzt beschriebenen Fall mit negativer Drehkreisfrequenzzahl n sinnvoller, von vornherein negatives Drehmoment m einzuregeln, da dann der Betrag des erforderlichen Drehmomentes m geringer wäre, dies entspräche also im Stillstand dem Betriebspunkt N. Dazu müßte bei eigentlich gefordertem Sollmoment gleich Null die Minimalmomentaufschaltung abhängig vom Vorzeichen der Drehkreisfrequenzzahl n erfolgen. Die zusätzliche Erfassung dieses Betriebszustandes erhöht jedoch die Komplexität der Ablaufsteuerung. Ob sich der dafür notwendige zusätzliche Aufwand lohnt, ist eine Frage des zur Verfügung stehenden Programmspeicherplatzes und der Rechenzeit und der praktischen Relevanz dieses Betriebsbereiches in der jeweiligen Anwendung.

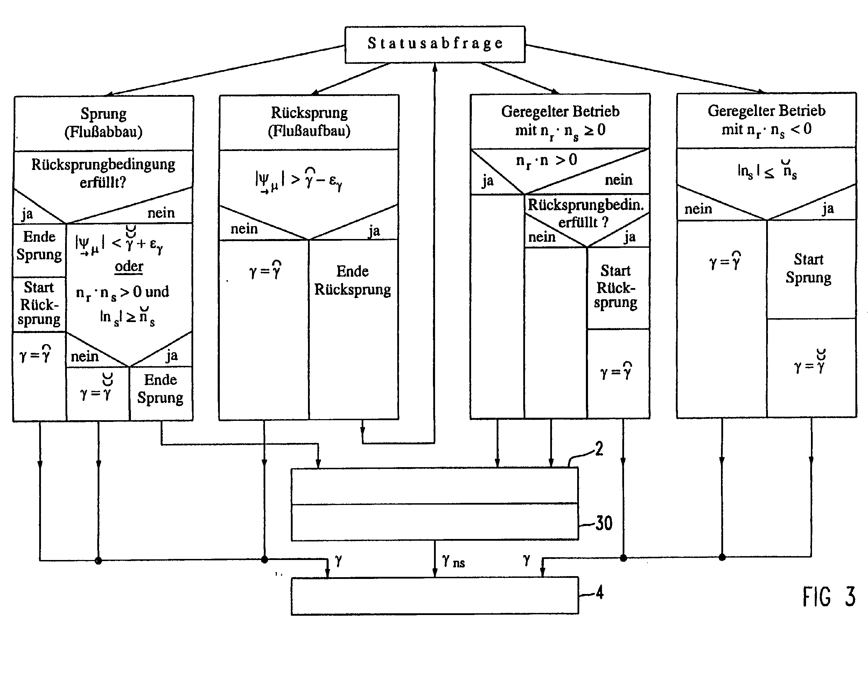

Die im Regelungsprogramm des Signalprozessors einer Signalverarbeitung einer drehgeberlosen, feldorientiert betriebenen Drehfeldmaschine implementierte Ablaufsteuerung zur Flußbetragsvariation wird anhand des Diagramms gemäß FIG 3 erläutert. Es wird vorausgesetzt, daß im regulären Betrieb der Maximalflußbetrag $\gamma$ = $\hat{\gamma}$ als Flußsollwert vorgegeben ist. Der Feldschwächbereich bleibt hier also unberücksichtigt.

Die dynamischen Übergänge "Sprung" und "Rücksprung" werden unterschieden vom sogenannten "geregelten Betrieb", in dem im Gegensatz zu den $\Psi\mu$-Sprungvorgängen praktisch keine Abweichungen zwischen Soll- und Istwert des Statorflußbetrages existieren. In normierter Darstellung gilt dann also || = $\gamma$. Mit der Unterteilung des geregelten Betriebes nach Vorzeichengleichheit bzw. -ungleichheit von Stator- und Schlupffrequenzzahl $n_s$ und $n_r$ ergeben sich vier Betriebszustände, die in der Darstellung gemäß FIG 3 als Blöcke dargestellt sind, und die von der Statusabfrage der Ablaufsteuerung erkannt werden. Die Ablaufsteuerung ist ausgangsseitig mit einer Statorfrequenz-Regelung 2 und einer Flußregelung 4 verknüpft, wobei der Statorfrequenz-Regelung 2 eine Einrichtung 30 zur Berechnung eines Minimalmomentes m nachgeschaltet ist.

Arbeitet die Maschine im Generatorbetrieb, verzweigt die Ablaufsteuerung in den Block "geregelter Betrieb mit $n_r \cdot n_s$ < 0". Es folgt eine Abfrage, ob der Betrag der Statorfrequenzzahl $n_s$ seinen Grenzwert $\breve{n}_s$ erreicht oder unter-

schritten hat. Ist dies nicht der Fall, wird der Flußbetrag $\gamma$ gleich einem maximalen Flußbetrag $\widehat{\gamma}$ gesetzt und der Flußregelung 4 als Sollwert zugeführt. Ist der Betrag der Statorgrenzfrequenzzahl $n_s$ unterschritten, wird der Flußbetrag

$\gamma$ auf einen minimalen zu realisierenden Flußbetrag $\widetilde{\widetilde{\gamma}}$ gesetzt, um den Flußabbau des Sprungvorganges einzuleiten. Gleichzeitig wird ein Merker gesetzt, durch den die Statusabfrage im nächsten Rechenspiel in den Block "Sprung" verzweigt. Während des dynamischen Sprungvorganges wird laufend die Rücksprungbedingung überprüft. Sollte sich während des Sprungvorganges die Drehkreisfrequenzzahl n oder die Drehmomentanforderung so ändern, daß wieder der Betrieb mit $n_r \cdot n_s < 0$ und vollem Flußbetrag $\gamma$ möglich ist, wird der Sprung sofort abgebrochen. Als Flußsollwert wird dann wieder der Maximalwert $\widehat{\gamma}$ des Flußbetrages $\gamma$ vorgegeben, gleichzeitig wird der Merker "Rücksprung" für die Ablaufsteuerung gesetzt. Man erreicht mit dieser Abfrage, daß die Regelung schneller auf geänderte Betriebsbedingungen reagieren kann und nicht erst das Ende des Sprungvorganges abwarten muß.

Der Block "Sprung" hält den Flußsollwert solange auf einem minimalen Flußbetrag $\widetilde{\widetilde{\gamma}}$, bis eine Abbruchbedingung erfüllt ist. Die reguläre Abbruchbedingung ist gegeben, wenn die Statorfrequenzzahl $n_s$ ihr Vorzeichen gewechselt hat und der Betrag der Statorfrequenzzahl $n_s$ auf die Statorgrenzfrequenzzahl $n_s$ angestiegen ist. In diesem Fall wird der Merker "Sprung" zurückgesetzt und die Statorfrequenz-Regelung 2 wird aktiviert, die ab dann den Betrag der

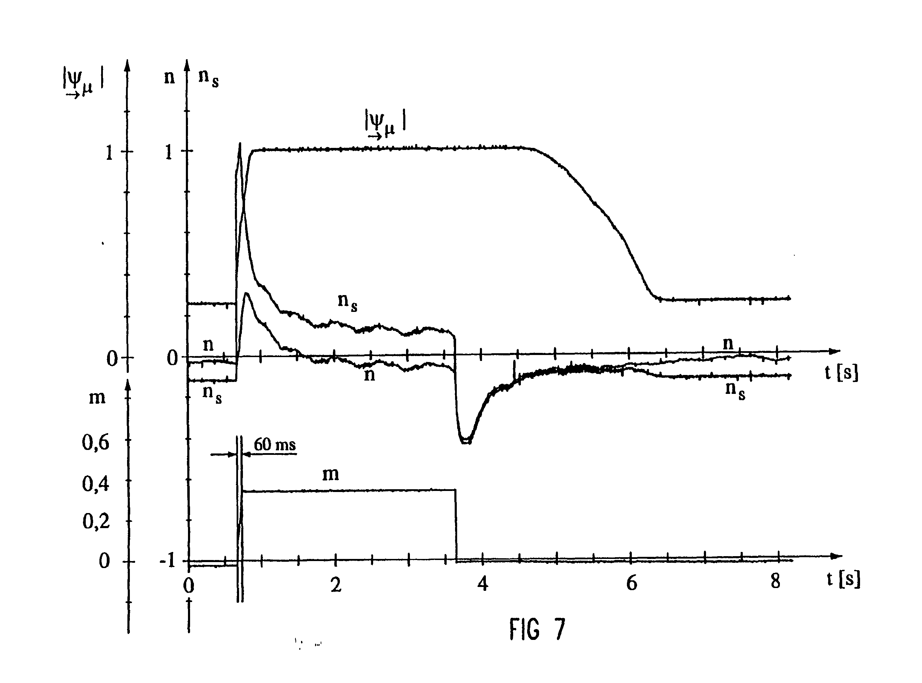

Statorfrequenzzahl $n_s$ konstant auf der minimalen Statorgrenzfrequenzzahl $\breve{n}_s$ hält. Bei diesem Übergang ist es erforderlich, den Integrator 16 der Statorfrequenz-Regelung 2 (FIG 7) mit dem Istwert des Statorflußbetragsquadrates am Ende des Sprungs zu initialisieren. Da die Statorfrequenz-Regelung 2 nach dem Übergang den Flußbetrag $\gamma$ vorgibt, wäre andernfalls ein Sprung dieser Größe die Folge.

Erreicht der Flußbetrag $\gamma$ den Minimalwert $\widetilde{\widetilde{\gamma}}$, ohne daß eine der beiden obigen Bedingungen erfüllt ist, besitzt das aktuelle Drehmoment nicht den erforderlichen Mindestwert, deshalb wird der Betrag der Statorgrenzfrequenzzahl

$\breve{n}_s$ nicht erreicht. Der Sprung wird dann ebenfalls abgebrochen, damit das Programm zur Statorfrequenz-Regelung verzweigt und das Minimalmoment m errechnet und aufgeschaltet wird. Da der Flußbetrag $\gamma$ sich annähernd in Form einer Exponentialfunktion, am Ende des Flußabbaus also nur sehr langsam seinen Sollwert nähert, ist als Abbruchschwelle ein Wert vorgegeben, der um $\varepsilon_\gamma$ geringfügig über dem minimalen Flußbetrag $\widetilde{\widetilde{\gamma}}$ liegt. Damit wartet die Ablaufsteuerung nicht länger als erforderlich auf das Erreichen der Statorgrenzfrequenzzahl $\breve{n}_s$ und kann im geregelten Betrieb schneller auf die geänderten Betriebsbedingungen reagieren.

Die annähernd exponentialförmige Flußbetragsänderung, die sich durch die einfache sprungförmige Änderung des Flußbetrags $\gamma$ ergibt, hat den Vorteil, daß einerseits der Vorzeichenwechsel der Statorfrequenzzahl $n_s$ relativ schnell geschieht und der besonders kritische Betriebsbereich dadurch zügig durchfahren wird, und daß andererseits sich am Ende des Sprungs wieder ein annähernd stationärer Betrieb eingestellt hat, so daß der Übergang in den Statorfrequenzregelbetrieb keine Probleme bereitet. Die auf stationären Voraussetzungen beruhenden Gleichungen der Rücksprungbedingungen und der Minimalmomentberechnung sind so in guter Näherung erfüllt.

Da die Rücksprungbedingung auf einer gemeinsamen Bedingung für positive und negative Drehmomente basiert, müssen im Statorfrequenzregelbetrieb mit $n_r \cdot n_s > 0$ vor Abfrage der Rücksprungbedingung alle Betriebspunkte mit Vorzeichengleichheit von Drehkreisfrequenzzahl n und Schlupffrequenzzahl $n_r$ erkannt werden. In diesen Fällen, in denen Motorbetrieb vorliegt, verzweigt das Programm direkt zur Statorfrequenz-Regelung 2, genau wie in den Fällen, in denen die Rücksprungbedingung nicht erfüllt ist. Bei erfüllter Rücksprungbedingung wird durch Setzen eines Merkers und Vorgabe des maximalen Flußbetrags $\widehat{\gamma}$ als Flußsollwert der Rücksprung eingeleitet.

Im Betriebszustand "Rücksprung" wird als einzige Abbruchbedingung der vollständige Flußaufbau überprüft, die Flußschwelle liegt aus den oben diskutierten Gründen um $\varepsilon_\gamma$ unterhalb des maximalen Flußbetrags $\widehat{\gamma}$. Ist die Abbruchbedingung erfüllt, verzweigt das Programm zunächst wieder in die Statusabfrage und von dort in den geregelten Betrieb mit $n_r \cdot n_s < 0$. Haben sich Drehmoment und Drehzahl während des Rücksprungs nicht wesentlich geändert, nimmt die Regelung den regulären Betrieb mit maximalem Fluß $\widehat{\gamma}$ auf. Haben sich die Betriebsbedingungen jedoch während des Rücksprungs so geändert, daß die Statorgrenzfrequenzzahl $\breve{n}_s$ nach Ende des Rücksprungs immer noch unterschritten ist, kann sofort wieder ein Sprung ausgelöst werden, um in den Statorfrequenzregelbetrieb zu gelangen.

Der FIG 3 ist zu entnehmen, daß der Statorfrequenz-Regelung 2 eine Einrichtung 30 zur Berechnung eines Minimalmomentes $\breve{\tilde{m}}$ nachgeschaltet ist. Wie ein Minimalmoment $\breve{\tilde{m}}$ berechnet wird, wird im folgenden angegeben:

Das Minimalmoment wird gemäß folgender Gleichung:

$$\left| n_r\left(\breve{\tilde{\gamma}}\right) \right| \le 1 - 2 \cdot \breve{n}_s - \varepsilon \qquad (3)$$

berechnet.

Die Beziehung zwischen dem Minimalwert $\breve{\tilde{\tilde{m}}}$ und der Schlupffrequenzzahl $\tilde{n}_r$ lautet:

$$\frac{\breve{\tilde{\tilde{m}}}}{\breve{\tilde{\gamma}}^2} = 2 \cdot \frac{\tilde{n}_r\left(\breve{\tilde{\gamma}}\right)}{1 + \left(\tilde{n}_r\left(\breve{\tilde{\gamma}}\right)\right)^2} \cdot \frac{\breve{\tilde{\gamma}}^2}{\breve{\tilde{\gamma}}^2} \qquad (5)$$

Im Statorfrequenzregelbetrieb mit

$$\left| \tilde{n}_s \right| = +\breve{n}_s \text{ und } \gamma = \breve{\tilde{\gamma}}$$

gilt für positive Drehmomente

$$m > 0: \qquad \tilde{n}_r\left(\breve{\tilde{\gamma}}\right) = \breve{n}_s - n \Rightarrow \frac{\breve{\tilde{\tilde{m}}}}{\breve{\tilde{\gamma}}^2}(\tilde{n}) = \frac{2 \cdot \left(\breve{n}_s - \tilde{n}\right)}{1 + \left(\breve{n}_s - \tilde{n}\right)^2} \cdot \frac{\breve{\tilde{\gamma}}^2}{\breve{\tilde{\gamma}}^2} \qquad (6)$$

Um im Echtzeitbetrieb die aufwendige Division zu vermeiden, kann der stets positive Term $(\breve{n}_s - \tilde{n})^2$ als klein gegen Eins angenähert werden. Es folgt daraus die Ungleichung

$$\tilde{n}_r\left(\breve{\tilde{\gamma}}\right) = \breve{n}_s - n \le 1 \Rightarrow \frac{\breve{\tilde{\tilde{m}}}}{\breve{\tilde{\gamma}}^2}(\tilde{n}) \le 2 \cdot \left(\breve{n}_s - \tilde{n}\right) \cdot \frac{\breve{\tilde{\gamma}}^2}{\breve{\tilde{\gamma}}^2} \text{ für } m > 0 \qquad (7)$$

Wird das Minimalmoment aus der rechten Seite der rechten Ungleichung berechnet, kann es also größer sein, als unbedingt erforderlich, dafür ist der Term sehr einfach zu berechnen. Zur Aufschaltung negativer Drehmomente erhält man mit dem gleichen Ansatz

$$\left| \tilde{n}_r\left(\breve{\tilde{\gamma}}\right) \right| = \left| -\breve{n}_s - n \right| \le 1 \Rightarrow -\frac{\breve{\tilde{\tilde{m}}}}{\breve{\tilde{\gamma}}^2}(\tilde{n}) \ge 2\left(-\breve{n}_s - \tilde{n}\right)\frac{\breve{\tilde{\gamma}}^2}{\breve{\tilde{\gamma}}^2} \text{ für } m < 0 \qquad (8)$$

Zur Herleitung der Rücksprungbedingung wird zunächst anhand der Darstellung gemäß FIG 1 eine Bedingung

für die Schlupffrequenzzahl ñ$_r$ angegeben, die sich stationär nach dem Rücksprung bei Flußbetrag $\gamma = \hat{\gamma}$ eingestellt, damit nach dem Rücksprung die Statorgrenzfrequenz $\check{n}_s$ nicht unterschritten wird. Dabei unterscheidet man je nach Vorzeichen des Drehmoments m zunächst zwei Fälle:

$$m > 0 \implies \text{sign}(\tilde{n}) = -1; \qquad \text{sign}(\tilde{n}_r) = 1$$
$$\implies \tilde{n}_s = \tilde{n} + \tilde{n}_r \leq -(\check{n}_s + \varepsilon) \implies |\tilde{n}| - |\tilde{n}_r| \geq \check{n}_s + \varepsilon \tag{9}$$

$$m < 0 \implies \text{sign}(\tilde{n}) = 1; \qquad \text{sign}(\tilde{n}_r) = -1$$
$$\implies \tilde{n}_s = \tilde{n} + \tilde{n}_r \geq \check{n}_s + \varepsilon \implies |\tilde{n}| - |\tilde{n}_r| \geq \check{n}_s + \varepsilon \tag{10}$$

Die beiden Beziehungen enthalten als gemeinsame Bedingung für die Schlupffrequenzzahl ñ$_r$ bei Maximalfluß in Abhängigkeit von der Drehzahl

$$|\tilde{n}| - |\tilde{n}_r| \geq \check{n}_s + \varepsilon \qquad \text{mit } \tilde{n}_r = \tilde{n}_r(\hat{\gamma}) \tag{11}$$

Um die Schlupffrequenzzahl ñ$_r$ als Funktion des Drehmomentes m anzugeben, kann man folgende Gleichung herleiten:

$$\tilde{m} = 2 \cdot \frac{\tilde{n}_r}{1 + \tilde{n}_r^2} \cdot \gamma^2 \tag{12}$$

Dabei ist zur Vereinfachung angenommen, daß die Rotorparameter ihren Nominalwerten entsprechen. Für die Schlupffrequenzzahl n$_r$ bei Maximalfluß $\hat{\gamma}$ folgt daraus

$$\frac{\tilde{m}}{\hat{\gamma}^2} = 2 \cdot \frac{\tilde{n}_r(\hat{\gamma})}{1 + \left(\tilde{n}_r(\hat{\gamma})\right)^2} \tag{13}$$

Die sich ergebende quadratische Gleichung

$$\frac{\tilde{m}}{\hat{\gamma}^2} + \frac{\tilde{m}}{\hat{\gamma}^2} \cdot \left(\tilde{n}_r(\hat{\gamma})\right)^2 - 2 \cdot \tilde{n}_r(\hat{\gamma}) = 0 \tag{14}$$

hat die technische sinnvolle Lösung

$$|\tilde{n}_r(\hat{\gamma})| = \frac{\hat{\gamma}^2}{|\tilde{m}|} - \sqrt{\frac{\hat{\gamma}^4}{|\tilde{m}|^2} - 1} \qquad (15)$$

Mit Gleichung (11) erhält man nach wenigen Umformungen eine leicht in Echtzeit zu überprüfende Rücksprung-bedingung:

$$|\tilde{m}| - \frac{\hat{\gamma}^2}{|\tilde{m}|} + \sqrt{\frac{\hat{\gamma}^4}{|\tilde{m}|^2} - 1} \geq \check{n}_s + \varepsilon$$

$$\Rightarrow \left[1 + (\check{n}_s + \varepsilon - |\tilde{m}|)^2\right] \cdot \frac{|\tilde{m}|}{\hat{\gamma}^2} \leq 2 \cdot (|\tilde{m}| - \check{n}_s - \varepsilon) \qquad (16)$$

Zur Beschreibung der Sprungvorgänge wird der Faktor $k_\gamma$ wie bereits erwähnt, eingeführt, der bei Sprüngen zwischen den Grenzlinien $-\check{n}_s$ und $\check{n}_s$ gemäß der Darstellung in FIG 2 Werte zwischen -1 und +1 annimmt. Jedem Wert von $k_\gamma$ ist eine feste Statorfrequenzzahl $n_s$ zugeordnet, so daß gilt:

$$n_s = k_\gamma \cdot \check{n}_s \quad \text{mit} \ -1 \leq k_\gamma \leq +1 \quad \text{für} \ -\check{n}_s \leq n_s \leq \check{n}_s \qquad (17)$$

In der Darstellung gemäß FIG 2 durchläuft der Faktor $k_\gamma$ also beim Übergang vom Betriebspunkt B zum Betriebspunkt C den Wertebereich -1 bis +1, im Übergang vom Betriebspunkt F zum Betriebspunkt G den Wertebereich +1 bis $\check{k}_\gamma$, mit $\check{k}_\gamma < 1$, da die Statorfrequenzzahl $n_s$ bis auf $(-\check{n}_s - \varepsilon)$ sinkt. Wird für die Sprungvorgänge angenommen, daß sie einerseits so schnell ablaufen, daß die Drehzahlidentifikation beim Nulldurchgang der Statorfrequenzzahl $n_s$ nicht fehlschlägt, andererseits aber das Verhalten der Drehstrommaschine noch angenähert durch die stationären Gleichungen beschrieben werden kann, kann man für die Schlupffrequenzzahl $\tilde{n}_r$ während des Sprungs angeben:

$$m > 0 : \qquad \tilde{n}_r = \tilde{n}_r(\hat{\gamma}) + (1 + k_\gamma) \cdot \check{n}_s$$

$$m < 0 : \qquad \tilde{n}_r = \tilde{n}_r(\hat{\gamma}) - (1 - k_\gamma) \cdot \check{n}_s \qquad (18)$$

$$\Rightarrow \tilde{n}_r = \tilde{n}_r(\hat{\gamma}) + \text{sign}(\tilde{m}) \cdot (1 + \text{sign}(\tilde{m}) \cdot k_\gamma) \cdot \check{n}_s$$

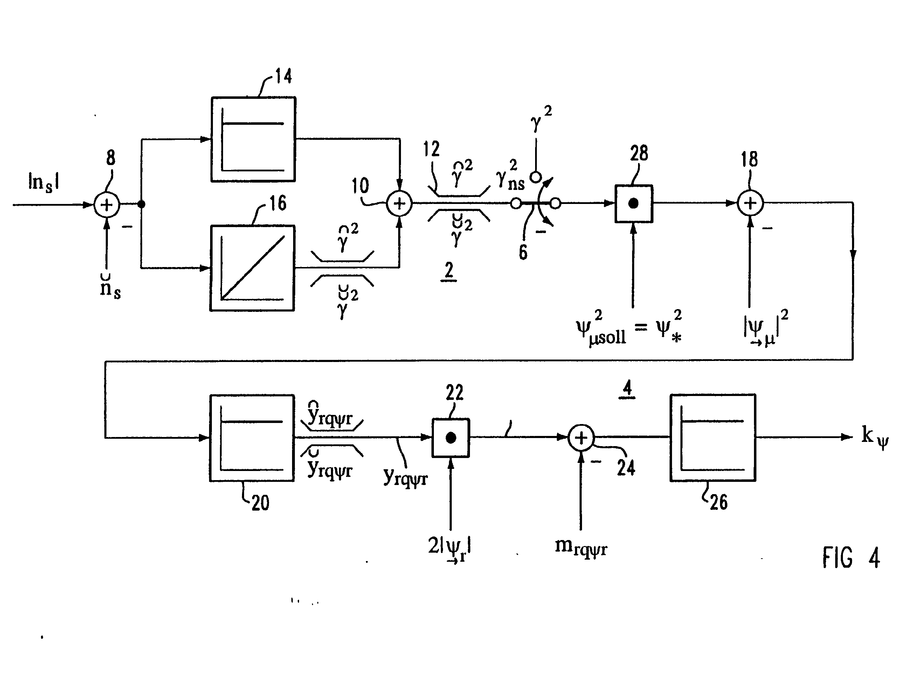

In der FIG 4 ist ein Blockschaltbild einer Ausführungsform der Statorfrequenz-Regelung 2 und der Flußregelung 4 nach FIG 3 näher dargestellt. Diese Statorfrequenz- und Flußregelung 2 und 4 und eine Ablaufsteuerung sind zusammen Bestandteil der Vorrichtung zur Vermeidung eines stationären Betriebes einer drehgeberlosen, feldorientiert betriebenen Drehfeldmaschine unterhalb einer minimalen Statorfrequenzzahl $n_s$. Die Statorfrequenzregelung 2 ist mittels eines Umschalters 6 mit dem Eingang der Flußregelung 4 verknüpft. Der zweite Eingang dieses Umschalters 6 ist mit einem Ausgang der Ablaufsteuerung verbunden, an dem ein vorgegebener Flußbetrag $\gamma$ ansteht, z.B. der Nennflußbetrag. In der dargestellten Stellung des Umschalters 6 ist der Ausgang der Statorfrequenzregelung 2 mit dem Eingang der Flußregelung 4 verbunden, so daß der Flußbetrag $\gamma$ bei konstanter Statorfrequenzzahl $n_s$ auf- bzw. abgebaut wird. Wird der Umschalter 6 mittels der Ablaufsteuerung umgelegt, so wird nur der Flußbetrag $\gamma$ geregelt.

Die Statorfrequenzregelung 2 weist eingangsseitig einen Vergleicher 8 und ausgangsseitig einen Addierer 10 mit nachgeschalteter Begrenzerschaltung 12 auf. Der Ausgang des Vergleichers 8 ist einerseits mittels eines proportional wirkenden Reglers 14 und andererseits mittels eines integral wirkenden Reglers 16 jeweils mit einem Eingang des Addierers 10 verbunden. Am nichtinvertierenden Eingang des Vergleichers 8 steht der Betrag $|n_s|$ der Statorfrequenzzahl

$n_s$ und an seinem invertierenden Eingang eine Statorgrenzfrequenzzahl $n_s$ an. Aus dem Betrag $|n_s|$ der Statorfrequenzzahl $n_s$ und der vorbestimmten Statorgrenzfrequenzzahl $n_s$ wird mittels des Vergleichers 10 eine Regelabweichung bestimmt, wobei die Stellgröße dieser Statorfrequenzregelung 2 das Quadrat des Flußbetrages $\gamma$ ist. Da dieses Flußbetragsquadrat $\gamma^2$ mittels einer Statorfrequenzregelung 2 generiert wird, wird dieses Flußbetragsquadrat $\gamma^2$ mit dem Index ns versehen. Der integral wirkende Regler 16 ist nach oben und unten auf zulässige Werte begrenzt. Der obere Grenzwert ist das Quadrat des maximalen Flußbetrages $\widehat{\gamma}$, wobei als unterer Grenzwert das Quadrat des minimal realisierbaren Flußbetrages $\widecheck{\gamma}$ vorgesehen ist. Diese Grenzwerte $\widehat{\gamma}^2$ und $\widecheck{\gamma}^2$ werden ebenfalls bei der Begrenzerschaltung 12 verwendet.

Die Flußregelung 4 weist einen Vergleicher 18 und einen Flußregler 20 auf, wie auch bei einer herkömmlichen Flußregelung. Ausgangsseitig ist dem begrenzten Flußregler 20 ein Multiplizierer 22, ein Vergleicher 24 und ein Ausgleichsregler 26 nachgeschaltet. Dem eingangsseitigen Vergleicher 18 ist am nichtinvertierenden Eingang ein Multiplizierer 28 vorgeschaltet. Der Vergleicher 18 erzeugt aus einem Flußsollwertbetrag und einem Flußistwertbetrag eine Regelabweichung, aus der mittels des proportional wirkenden Flußreglers 20 eine Rotorstromkomponente $y_{rq\psi r}$ erzeugt wird. Der Raumzeiger dieser Rotorstromkomponente $y_{rq\psi r}$ verläuft gleichgerichtet zum Raumzeiger $\underline{\Psi}r$ der Rotorflußverkettung. Diese Rotorstromkomponente $y_{rq\psi r}$ ist nach oben und unten begrenzt, so daß durch Flußbetragsänderungen hervorgerufene Streuflußkomponenten begrenzt werden. Im nachfolgenden Multiplizierer 22 wird diese Rotorstromkomponente $y_{rq\psi r}$ mit dem zweifachen Betrag des Rotorflusses $\underline{\Psi}r$ multipliziert und man erhält einen Sollwert eines Rotorblindmomentes $m_{rq\Psi rsoll}$. Ein entsprechender Istwert eines Rotorblindmomentes $m_{rq\psi r}$ kann sehr einfach durch Multiplikation des Rotorstrom-Raumzeigers $\underline{Y}r$ mit dem konjugiert komplexen Rotorfluß-Raumzeiger $\underline{\Psi}r^{\star}$ mit anschließender Realteilbildung berechnet werden. Diese Multiplikation wird durch folgende Gleichung:

$$m_{rq\psi r} = 2 \cdot \left| \underline{\psi}_r \right| \cdot y_{rq\psi r} = 2 \cdot \mathrm{Re}\left\{ \underline{\psi}_r^{\star} \cdot \underline{y}_r \right\} \qquad (19)$$

ausgedrückt.

Aus der ermittelten Rotorblindmomentenabweichung wird mittels des Ausgleichsreglers 26 eine Korrekturgröße $k_\psi$, generiert. Eine herkömmliche Flußregelung erzeugt ebenfalls eine Korrekturgröße $k_\psi$ mit der eine entsprechende Spannungskomponente des Statorspannungs-Raumzeigers derart verstellt wird, daß ein vorbestimmter Flußbetrag $\gamma$ sich einstellt. Die Korrekturgröße $k_\psi$ dieser modifizierten Flußregelung bewirkt das Gleiche.

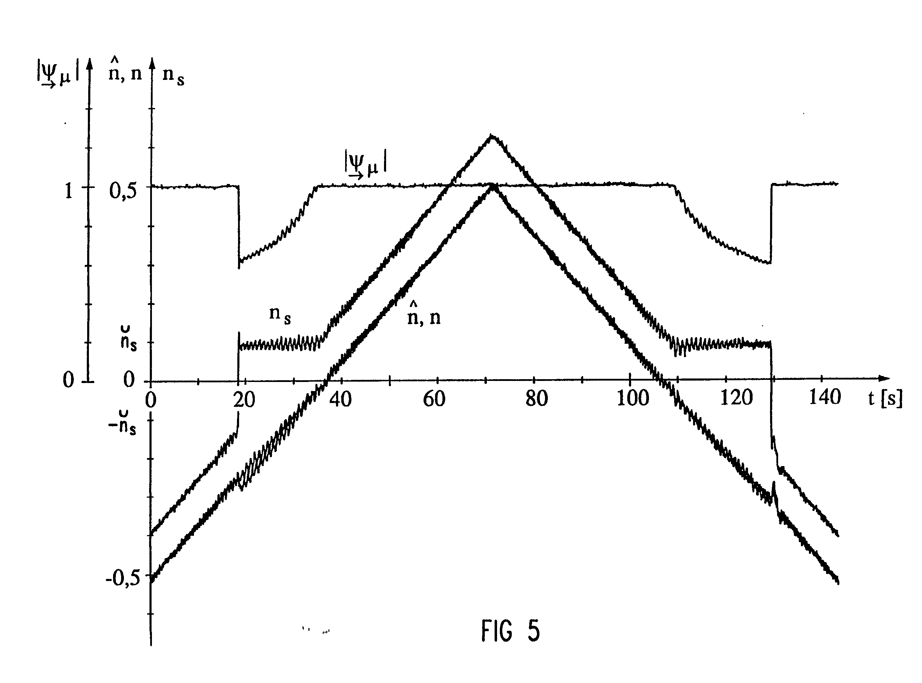

Die Diagramme der FIG 5 bis 7 zeigen Meßergebnisse, die mit dem erfindungsgemäßen Verfahren zur Flußbetragsvariation an einem Versuchsstand erzielt wurden. Als maximaler Flußbetrag $\gamma$ wurde der Bemessungsfluß ($\widehat{\gamma}$ = 1) gewählt, der Minimalflußbetrag $\widecheck{\gamma}$ ist mit Rücksicht auf die begrenzte Auflösung der Größen in der Festkommaarithmetik des Signalprozessors, zumal auch die Betragsquadrate der Flußgrößen verarbeitet werden müssen, auf $\widecheck{\gamma}$ = 0,25 festgelegt. Die minimale Statorfrequenzzahl $\widecheck{n}_s$, bei dem die Drehzahlidentifikation am Versuchsstand unter allen Lastbedingungen noch sicher arbeitet, ist im angegebenen Statorflußbetragsbereich etwa 0,5 Hz, das entspricht bei der Versuchsmaschine eine Statorfrequenzzahl $n_s$ von etwa $|n_s|$ = 0,05. Um den sicheren Betrieb auch unter ungünstigen Bedingungen zu gewährleisten (z.B. im Betrieb ohne Online-Identifikation des Statorwiderstandes $r_s$), ist die Statorgrenzfrequenzzahl $\widecheck{n}_s$ auf 0,1 und die Hysterese $\varepsilon$ auf 0,1 festgelegt.

In dem Diagramm gemäß FIG 5 sind zwei sehr langsame Reversiervorgänge dargestellt. Die Lastmaschine gibt die Drehkreisfrequenzzahl n nach einer dreieckförmigen Sollwertfunktion vor. Die Drehstrommaschine ist drehmomentgeregelt mit einer konstanten Sollwertvorgabe von $m_{soll}$ = 0,25, das entspricht etwa 70 % des nominalen Momentes. Bei t = 0 arbeitet die Drehfeldmaschine generatorisch. Zum Zeitpunkt t = 18 sek. erreicht die Statorfrequenzzahl $n_s$ ihren Minimalbetrag, deshalb löst die Ablaufsteuerung einen Sprung aus. Die Statorfrequenzzahl $n_s$ wechselt daraufhin ihr

Vorzeichen und wird vom Statorfrequenzregler 2 auf der positiven Statorgrenzfrequenzzahl $+\breve{n}_s$ gehalten, bis bei vollem Flußbetrag $|\underline{\Psi}\mu|$ der reguläre Motorbetrieb erreicht ist. Im Betrieb mit abgesenktem Flußbetrag $|\underline{\Psi}\mu|$ weicht die beobachtete Drehkreisfrequenzzahl $\hat{n}$ geringfügig von der gemessenen Drehkreisfrequenzzahl n ab, da die Berechnung der Größen in Maschinenmodell ungenauer wird und der Einfluß noch vorhandener Ungenauigkeit der Stromrichtermodellierung wegen des verringerten Statorspannungsbetrages steigt. Aus den gleichen Gründen tritt auch verstärkt eine statorfrequente Welligkeit des Drehkreisfrequenzzahlsignals auf, die sich wegen der für wenige Statorfrequenzperioden etwa konstanten Schlupffrequenz auch in der Statorfrequenz findet. Da die Statorfrequenzzahl $n_s$ wiederum die Eingangsgröße der Statorfrequenz-Regelung 2 ist, tritt die Welligkeit auch im Statorflußbetrag $|\underline{\Psi}\mu|$ auf.

Beim Übergang zurück in den Generatorbetrieb läuft der Vorgang in umgekehrter Reihenfolge ab. Zunächst schwächt die Statorfrequenz-Regelung 2 mit sinkender Drehkreisfrequenzzahl n kontinuierlich den Betrag des Statorflusses $|\underline{\Psi}\mu|$, bis etwa zum Zeitpunkt t = 129 sek. die Rücksprungbedingung erfüllt ist und der Antrieb durch den Flußaufbau zu negativer Statorgrenzfrequenzzahl $-\breve{n}_s$ wechselt.

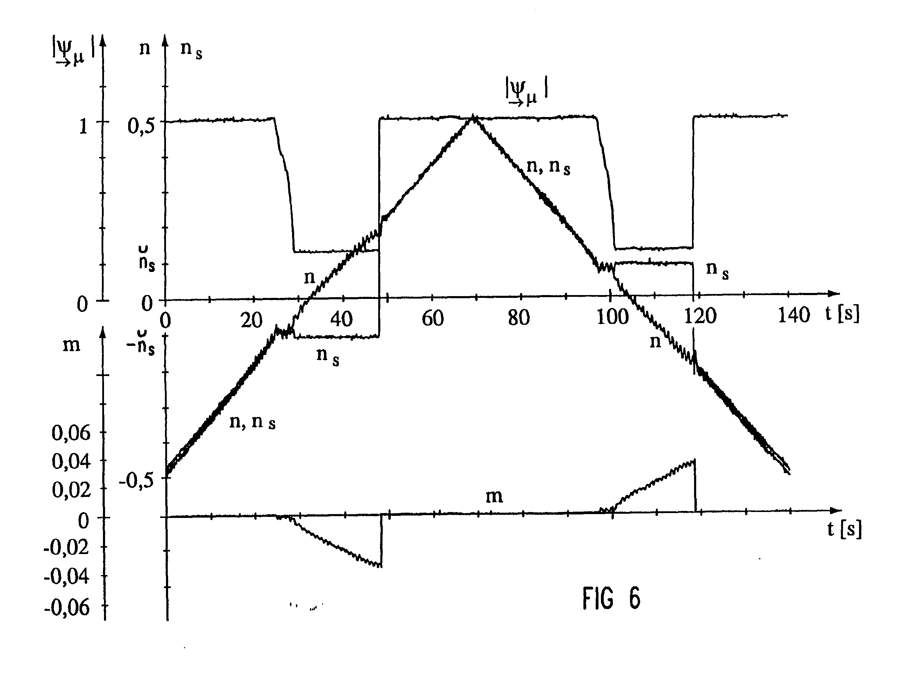

Die FIG 6 zeigt das gleiche Drehzahlspiel bei einem vorgegebenen Drehmomentsollwert von Null. In Betriebsbereichen ohne Minimalmomentaufschaltung sind Drehzahl- und Statorfrequenzsignal gleich. Bei Erreichen der Statorgrenzfrequenzzahl $-\breve{n}_s$ schwächt die Statorfrequenz-Regelung 2 den Betrag des Statorflusses $|\underline{\Psi}\mu|$ schnell auf seinen Minimalwert, gleichzeitig wird das drehzahlabhängige Minimalmoment m berechnet und aufgeschaltet. Der größte Betrag des Drehmomentes ist unmittelbar vor Eintreffen der Rücksprungbedingung erreicht und beträgt unter den gegebenen Bedingungen etwa 3,8 % des Kippmomentes.

Da die Statusabfrage der Ablaufsteuerung gemäß FIG 3 im Fall $n_r \cdot n_s = 0$ zur Statorfrequenz-Regelung 2 verzweigt, ist das Vorzeichen des Minimalmomentes m gleich dem Vorzeichen der Statorfrequenzzahl $n_s$ bei Erreichen des Statorgrenzfrequenzbetrages. Wäre dieser Fall dem Betrieb mit $n_r \cdot n_s < 0$ zugerechnet, würde erst ein Sprung ausgelöst und danach das Minimalmoment mit anderem Vorzeichen aufgeschaltet.

Im Diagramm gemäß der FIG 7 wird der Wechsel des Betriebszustandes durch Aufschalten einer sprungförmigen Drehmomentsollwertänderung bei konstantem Drehzahlsollwert der Lastmaschine ausgelöst. Vor dem Sprung arbeitet die Drehfeldmaschine stationär mit sehr kleiner negativer Drehzahl im Statorfrequenzregelbetrieb bei ng= $-\breve{n}_s$ .

Da das vorgegebene Sollmoment gleich Null ist, ist der Flußbetrag $|\underline{\Psi}\mu|$ auf seinen Minimalwert abgesenkt und ein geringes negatives Minimalmoment aufgeschaltet. In diesem Zustand wird nun positives Nominalmoment gefordert. Da der Flußbetrag $|\underline{\Psi}\mu|$ klein ist, erreicht die Schlupffrequenz schnell ihre Kippbegrenzung, eine weitere Drehmomenterhöhung ist deshalb nur mit steigendem Flußbetrag $|\underline{\Psi}\mu|$ möglich. Das Anregeln des Nominalmoments dauert daher in diesem Fall etwa 60 msek.. Hat die Lastmaschine die Laständerung ausgeregelt, stellt sich stationärer Betrieb mit positiver Statorfrequenzzahl $n_s$ und negativer Drehkreisfrequenzzahl n bei vollem Statorflußbetrag $|\underline{\Psi}\mu|$ ein.

Zusammenfassend läßt sich sagen, daß das beschriebene Verfahren zur Flußbetragsvariation eine praktikable Möglichkeit darstellt, ein Versagen der Drehzahlidentifikation im Bereich kleiner Statorfrequenzen zu vermeiden, wenn die unzulässigen Betriebsbereiche mit gleichzeitig sehr kleiner Drehzahl und kleinem Drehmoment in der Praxis eine untergeordnete Rolle spielen. Der Rechenaufwand für die Ablaufsteuerung ist verglichen mit anderen bereits erwähnten Verfahren gering und es sind keine Zusatzanforderung an Meßeinrichtungen oder Eigenschaften der Drehfeldmaschine zu stellen. Wie groß das erforderliche Minimalmoment und damit der Bereich unzulässiger Betriebspunkte bei kleinen Drehzahlen ist, hängt davon ab, wie klein die Statorfrequenz ist, bei der noch ein stationärer Betrieb möglich ist, und welche minimalen Flußbeträge realisierbar sind.

**Patentansprüche**

1. Verfahren zur Vermeidung eines stationären Betriebs einer drehgeberlosen, feldorientiert betriebenen Drehfeldmaschine innerhalb eines vorbestimmten Frequenzbereichs ($\pm\breve{f}_s$) um Statorfrequenz ($f_s$) Null mit folgenden Verfahrensschritten:

    a) Überprüfung, ob der Betrag einer identifizierten Drehzahl ($\hat{n}$) abnimmt,

b) Überprüfung, ob generatorischer oder motorischer Betrieb des Drehfeldes der Drehfeldmaschine vorliegt,

c) Überprüfung, ob der Betrag der Statorfrequenz ($f_s$) gleich einem Grenzwert ($\breve{f}_\mathbf{s}$) des vorbestimmten Frequenzbereiches ($\pm\breve{f}_\mathbf{s}$) ist,

d) sprungförmiger Abbau des Betrages der Statorflußverkettung ($\underrightarrow{\Psi}_\mathbf{\mu}$) auf einen vorbestimmten minimalen Flußbetrag ($\breve{\gamma}$), sobald der Betrag der Statorfrequenz ($f_s$) gleich dem Grenzwert ($\breve{f}_\mathbf{s}$) ist und ein generatorischer Betrieb des Drehfeldes der Drehfeldmaschine vorliegt,

e) kontinuierliche Verstellung des Betrags der Statorflußverkettung ($\underrightarrow{\Psi}_\mathbf{\mu}$), sobald der Betrag der Statorfrequenz ($f_s$) gleich dem Grenzwert ($\breve{f}_\mathbf{s}$) ist und ein motorischer Betrieb des Drehfeldes der Drehfeldmaschine vorliegt, wobei der Betrag der Statorfrequenz ($f_s$) auf den Grenzwert ($\breve{f}_\mathbf{s}$) geregelt wird,

f) sprungförmiger Aufbau des Betrags der Statorflußverkettung ($\underrightarrow{\Psi}_\mathbf{\mu}$) auf einen vorbestimmten maximalen Flußbetrag ($\hat{\gamma}$), sobald es möglich ist, **dadurch** das Vorzeichen der Statorfrequenz ($f_s$) zu wechseln, wobei der Betrag der Statorfrequenz ($f_s$) nach Erreichen des maximalen Flußbetrags ($\hat{\gamma}$) größer oder gleich des Grenzwerts ($\breve{f}_\mathbf{s}$) ist.

2. Verfahren nach Anspruch 1, wobei der Flußbetrag ($\gamma$) so weit verringert wird, daß die folgende Bedingung:

$$|n_\mathbf{s}| \geq \breve{n}_\mathbf{s}$$

mit

$|n_s|$ = Betrag der Statorfrequenzzahl

$\breve{n}_\mathbf{s}$ = minimale Statorfrequenzzahl

gerade noch erfüllt wird

3. Verfahren nach einem der Ansprüche 1 oder 2, wobei der Grenzwert ($\breve{f}_\mathbf{s}$), der nach dem Rücksprung erreicht werden soll, um einen Hysteresewert ($\varepsilon$) betragsmäßig erhöht wird.

4. Verfahren nach Anspruch 1, wobei die Zulässigkeit des Vorzeichenwechsels der Statorfrequenz ($f_s$) anhand der folgenden normierten Gleichung:

$$\frac{|\tilde{m}|}{\hat{\gamma}^2} \cdot \left[1 + (\breve{n}_\mathbf{s} + \varepsilon - |\tilde{n}|)^2\right] \leq 2 \cdot (|\tilde{n}| - \breve{n}_\mathbf{s} - \varepsilon)$$

mit

$|\tilde{m}|$ = Betrag des stationären Drehmoments

$\hat{\gamma}$ = maximaler Flußbetrag

$\breve{n}_\mathbf{s}$ = minimale Statorfrequenzzahl
$\varepsilon$ = Hysterese
$|n|$ = Betrag der Drehkreisfrequenzzahl

überprüft wird.

**5.** Verfahren nach Anspruch 1, wobei ein generatorischer Betrieb der Drehfeldmaschine vorliegt, wenn die Vorzeichen der Statorfrequenz ($f_s$) und der Schlupffrequenz ($f_r$) unterschiedlich sind.

**6.** Verfahren nach Anspruch 1, wobei ein motorischer Betrieb des Drehfeldes der Drehfeldmaschine vorliegt, wenn die Vorzeichen der Statorfrequenz ($f_s$) und der Schlupffrequenz ($f_r$) gleich sind.

**7.** Verfahren nach Anspruch 1, wobei ein generatorischer Betrieb des Drehfeldes der Drehfeldmaschine vorliegt, wenn der Wert des Produkts aus Stator- und Schlupffrequenz ($f_s, f_r$) kleiner Null ist.

**8.** Verfahren nach Anspruch 1, wobei ein motorischer Betrieb der des Drehfeldes Drehfeldmaschine vorliegt, wenn der Wert des Produkts aus Stator- und Schlupffrequenz ($f_s, f_r$) größer Null ist.

**9.** Verfahren nach Anspruch 4, wobei ein stationäres Drehmoment gemäß folgender normierter Gleichung:

$$\tilde{m} = 2 \cdot \frac{\tilde{n}_r}{1 + \tilde{n}_r^2} \cdot \gamma^2$$

mit

$\tilde{n}_r$ = stationäre Schlupffrequenzzahl
$\gamma$ = Flußbetrag

berechnet wird.

**10.** Verfahren nach Anspruch 1, wobei während des sprungförmigen Abbaus des Flußbetrag ($\gamma$) einer Statorflußverkettung ($\underline{\Psi}_\mu$) bei einem positiven Drehmoment (m) eine Schlupffrequenzzahl ($n_r$) gemäß folgender Gleichung:

$$\tilde{n}_r = \tilde{n}_r(\hat{\gamma}) + (1 + k_\gamma) \cdot \tilde{n}_s$$

mit

$\tilde{n}_r$ = stationäre Schlupffrequenzzahl

$\hat{\gamma}$ = maximaler Flußbetrag
$k_\gamma$ = Faktor

berechnet wird.

**11.** Verfahren nach Anspruch 1, wobei während des sprungförmigen Abbaus des Flußbetrages ($\gamma$) einer Statorflußverkettung ($\underline{\Psi}_\mu$) bei einem negativen Drehmoment (m) eine Schlupffrequenzzahl ($n_r$) gemäß folgender Gleichung:

$$\tilde{n}_r = \tilde{n}_r(\hat{\gamma}) - (1 - k_\gamma) \cdot \tilde{n}_s$$

mit

$\tilde{n}_r$ = stationäre Schlupffrequenzzahl

$\hat{\gamma}$ = maximaler Flußbetrag
$k_\gamma$ = Faktor

berechnet wird.

**12.** Verfahren nach Anspruch 10 oder 11, wobei der Faktor ($k_\gamma$) Werte zwischen -1 und +1 annimmt.

**13.** Vorrichtung zur Vermeidung eines stationären Betriebes einer drehgeberlosen, feldorientiert betriebenen Drehfeldmaschine innerhalb eines vorbestimmten Frequenzbereiches um Statorfrequenz ($f_s$) Null mit einer Ablaufsteuerung, einer Statorfrequenz-Regelung (2) und einer Flußregelung (4), wobei die Statorfrequenz-Regelung (2) ausgangsseitig mittels eines Umschalters (6) mit dem Eingang der Flußregelung (4) verknüpft ist, wobei der zweite Eingang des Umschalters (6) mit einem Ausgang der Ablaufsteuerung verbunden ist, an dem ein minimaler oder maximaler Flußbetrag ($\breve{\gamma}, \hat{\gamma}$) ansteht, wobei ein Steuerausgang der Ablaufsteuerung mit einem Steuereingang des Umschalters (6) verknüpft ist, und wobei am Ausgang der Flußregelung (4) ein Korrekturwert ($k_\psi$) für eine flußbildende Komponente eines Statorspannungs-Raumzeigers ansteht.

**14.** Vorrichtung nach Anspruch 13, wobei die Statorfrequenz-Regelung (2) einen Vergleicher (8), einen proportionalen und integralen Regler (14,16) einen Addierer (10) und eine Begrenzerschaltung (12) aufweist, wobei die beiden Regler (14,16) eingangsseitig mit dem Ausgang des Vergleichers (8) und ausgangsseitig jeweils mit einem Eingang des Addierers (10) verknüpft sind, der ausgangsseitig mit der Begrenzerschaltung (12) verbunden ist.

**15.** Vorrichtung nach Anspruch 13, wobei die Flußregelung (4) einen ersten Vergleicher (18), einen Flußregler (20) mit nachgeschalteter Begrenzerschaltung, einen Multiplizierer (22), einen zweiten Vergleicher (24) und einen Ausgleichs-Regler (26) aufweist, wobei der Flußregler (20) eingangsseitig mit dem Ausgang des ersten Vergleichers (18) und die Begrenzerschaltung ausgangsseitig mit einem Eingang des Multiplizierers (22) verknüpft sind, der ausgangsseitig mit einem nichtinvertierenden Eingang des zweiten Vergleichers (24) verbunden ist, dem ausgangsseitig der Ausgleichs-Regler (26) nachgeschaltet ist, wobei am zweiten Eingang des Multiplizierers (22) ein zweifacher Wert des Rotorflußbetrages ($|\underline{\Psi}r|$) und am invertierenden Eingang des zweiten Vergleichers (24) ein Rotorblindmoment-Istwert ($m_{rq\psi r}$) anstehen und wobei an den Eingängen des ersten Vergleichers (18) ein Soll- und ein IstBetrag der Statorflußverkettung ($\underline{\Psi}\mu$) anstehen.

## Claims

**1.** Method for avoiding steady-state operation of a polyphase machine which is operated on a field-oriented basis and has no rotary encoders, within a predetermined frequency range ($\pm \breve{F}_s$) around the stator frequency ($f_s$) zero, comprising the following method steps:

a) a check is carried out to determine whether the magnitude of an identified rotation speed ($\hat{n}$) is decreasing,
b) a check is carried out to determine whether the rotating field of the polyphase machine is being operated as a generator or motor,

c) a check is carried out to determine whether the magnitude of the stator frequency ($f_s$) is equal to a limit value ($\breve{F}_s$) of the predetermined frequency range ($\pm \breve{F}_s$),

d) the magnitude of the stator flux linkage ($\underrightarrow{\Psi}\mu$) is suddenly reduced to a predetermined minimum flux magnitude ($\breve{\gamma}$) as soon as the magnitude of the stator frequency ($f_s$) is equal to the limit value ($\breve{F}_s$), and the rotating field of the polyphase machine is being operated as a generator,

e) the magnitude of the stator flux linkage ($\underrightarrow{\Psi}\mu$) is continuously adjusted as soon as the magnitude of the stator frequency ($f_s$) is equal to the limit value ($\breve{F}_s$) and the rotating field of the polyphase machine is being operated as a motor, with the magnitude of the stator frequency ($f_s$) being regulated at the limit value ($\breve{F}_s$),

f) the magnitude of the stator flux linkage ($\underrightarrow{\Psi}\mu$) is suddenly increased to a predetermined maximum flux mag-

nitude ($\widehat{\gamma}$) as soon as it is possible in this way to change the mathematical sign of the stator frequency ($f_s$), with the magnitude of the stator frequency ($f_s$) after reaching the maximum flux magnitude ($\widehat{\gamma}$) being greater than or equal to the limit value ($\breve{f}_s$).

2. Method according to Claim 1, with the flux magnitude ($\gamma$) being reduced until the following condition:

$$|n_s| \geq \breve{n}_s$$

where

$|n_s|$ = magnitude of the stator frequency

$\breve{n}_s$ = minimum stator frequency

is still just satisfied.

3. Method according to one of Claims 1 or 2, with the magnitude of the limit value ($\breve{f}_s$), which is intended to be achieved after the backward jump, being increased by a hysteresis value ($\varepsilon$).

4. Method according to Claim 1, with the permissibility of the mathematical-sign change of the stator frequency ($f_s$) being checked using the following normalized equation:

$$\frac{|\tilde{m}|}{\widehat{\gamma}^2} \cdot \left[1 + (\breve{n}_s + \varepsilon - |\tilde{n}|)^2\right] \leq 2 \cdot (|\tilde{n}| - \breve{n}_s - \varepsilon)$$

where

$|\tilde{m}|$ = magnitude of the steady-state torque

$\widehat{\gamma}$ = maximum flux magnitude

$\breve{n}_s$ = minimum stator frequency

$\varepsilon$ = hysteresis

$|n|$ = magnitude of the circular frequency.

5. Method according to Claim 1, with the polyphase machine being operated as a generator when the mathematical sign of the stator frequency ($f_s$) and the slip frequency ($f_r$) differ.

6. Method according to Claim 1, with the rotating field of the polyphase machine being operated as a motor when the mathematical sign of the stator frequency ($f_s$) and the slip frequency ($f_r$) are the same.

7. Method according to Claim 1, with the rotating field of the polyphase machine being operated as a generator when the value of the product of the stator and slip frequencies ($f_s$, $f_r$) is less than zero.

8. Method according to Claim 1, with the rotating field of the polyphase machine being operated as a motor when the value of the product of the stator and slip frequencies ($f_s$, $f_r$) is greater than zero.

9. Method according to Claim 4, with a steady-state torque being calculated using the following normalized equation:

$$\widetilde{m} = 2 \cdot \frac{\widetilde{n}_r}{1+\widetilde{n}_r^2} \cdot \gamma^2$$

where

$\widetilde{n}_r$ = steady-state slip frequency

$\gamma$ = flux magnitude.

**10.** Method according to Claim 1, with a slip frequency ($n_r$) being calculated during the sudden reduction in the flux magnitude ($\gamma$) of a stator flux linkage ($\overset{\Psi}{\rightarrow}_\mu$) for a positive torque (m) using the following equation:

$$\widetilde{n}_r = \widetilde{n}_r(\widehat{\gamma}) + (1 + k_\gamma) \cdot \breve{n}_s$$

where

$\widetilde{n}_r$ = steady-state slip frequency

$\widehat{\gamma}$ = maximum flux magnitude

$k_\gamma$ = factor.

**11.** Method according to Claim 1, with a slip frequency ($n_r$) being calculated during the sudden reduction in the flux magnitude ($\gamma$) of a stator flux linkage ($\overset{\Psi}{\rightarrow}_\mu$) for a negative torque (m) using the following equation:

$$\widetilde{n}_r = \widetilde{n}_r(\widehat{\gamma}) - (1 - k_\gamma) \cdot \breve{n}_s$$

where

$\widetilde{n}_r$ = steady-state slip frequency

$\widehat{\gamma}$ = maximum flux magnitude

$k_\gamma$ = factor.

**12.** Method according to Claim 10 or 11, with the factor ($k_\gamma$) assuming values between -1 and +1.

**13.** Apparatus for avoiding steady-state operation of a polyphase machine which is operated on a field-oriented basis and has no rotary encoders, within a predetermined frequency range around the stator frequency ($f_s$) zero, having sequence control, having stator-frequency regulation (2) and having flux regulation (4), with the output side of the stator-frequency regulation (2) being linked by means of a changeover switch (6) to the input of the flux regulation (4), with the second input of the changeover switch (6) being connected to an output of the sequence control at which a minimum or maximum flux magnitude ($\breve{\gamma}$, $\widehat{\gamma}$) is produced, with a control output of the sequence control being linked to a control input of the changeover switch (6), and with a correction value ($k_\psi$) for a flux-forming component of a stator-voltage space vector being produced at the output of the flux regulation (4).

**14.** Apparatus according to Claim 13, with the stator-frequency regulation (2) having a comparator (8), a proportional and integral regulator (14, 16), an adder (10) and a limiter circuit (12), and with the two regulators (14, 16) being linked on the input side to the output of the comparator (8) and on the output side to in each case one input of the adder (10), which is connected on the output side to the limiter circuit (12).

**15.** Apparatus according to Claim 13, with the flux regulation (4) having a first comparator (18), a flux regulator (20) followed by a limiter circuit, a multiplier (22), a second comparator (24) and a compensation regulator (26), with the flux regulator (20) being linked on the input side to the output of the first comparator (18) and with the limiter circuit being linked on the output side to an input of the multiplier (22), which is connected on the output side to a non-inverting input of the second comparator (24), whose output side is followed by the compensation regulator (26), with twice the value of the rotor flux magnitude ($|\underset{\rightarrow}{\overset{\Psi}{}}_r|$) being applied to the second input of the multiplier (22) and with a rotor dummy-torque actual value ($m_{rq\psi r}$) being applied to the inverting input of the second comparator (24), and with a nominal and an actual magnitude of the stator flux linkage ($\underset{\rightarrow}{\overset{\Psi}{}}_\mu$) being applied to the inputs of the first comparator (18).

## Revendications

1. Procédé pour éviter un régime stationnaire d'une machine polyphasée commandée par orientation de champ et sans capteur de rotation à l'intérieur d'une plage de fréquence prédéterminée ($\pm\ \breve{f}_s$) autour de la fréquence statorique ($f_s$) nulle, avec les étapes suivantes :

   a) vérifier si la valeur absolue d'une vitesse de rotation identifiée ($\hat{n}$) diminue,
   b) vérifier s'il y a fonctionnement générateur ou moteur du champ rotatif de la machine polyphasée,

   c) vérifier si la valeur absolue de la fréquence statorique ($f_s$) est égale à une valeur limite ($\breve{f}_s$) de la plage de fréquence prédéterminée ($\pm\ \breve{f}_s$),

   d) diminuer brusquement la valeur absolue de l'enchaînement de flux statorique ($\underset{\rightarrow}{\overset{\Psi}{}}_\mu$) à une valeur absolue de flux minimale prédéterminée ($\breve{\gamma}$) dès que la valeur absolue de la fréquence statorique ($f_s$) est égale à la valeur limite ($\breve{f}_s$) et qu'il y a un fonctionnement générateur du champ rotatif de la machine polyphasée,

   e) régler en continu la valeur absolue de l'enchaînement de flux statorique ($\underset{\rightarrow}{\overset{\Psi}{}}_\mu$) dès que la valeur absolue de la fréquence statorique ($f_s$) est égale à la valeur limite ($\breve{f}_s$) et qu'il y a un fonctionnement moteur du champ rotatif de la machine polyphasée, la valeur absolue de la fréquence statorique ($f_s$) étant réglée sur la valeur limite ($\breve{f}_s$),

   f) diminuer brusquement la valeur absolue de l'enchaînement de flux statorique ($\underset{\rightarrow}{\overset{\Psi}{}}_\mu$) à une valeur absolue de flux maximale prédéterminée ($\hat{\gamma}$) dès qu'il est possible de changer ainsi le signe de la fréquence statorique ($f_s$), la valeur absolue de la fréquence statorique ($f_s$) après avoir atteint la valeur absolue de flux maximale ($\hat{\gamma}$) étant supérieure ou égale à la valeur limite ($\breve{f}_s$).

2. Procédé selon la revendication 1, dans lequel la valeur absolue de flux ($\gamma$) est réduite jusqu'à ce que la condition suivante :

$$|n_s| \ \geq \ \breve{n}_s$$

avec

$|n_s|$ = valeur absolue du chiffre de fréquence statorique

$\breve{n}_s$ = chiffre de fréquence statorique minimal

soit encore tout juste satisfaite.

**3.** Procédé selon l'une des revendications 1 ou 2, dans lequel la valeur limite ($\breve{f}_s$) qui doit être atteinte après le brusque retour en arrière est augmentée d'une valeur d'hystérésis (ε) en valeur absolue.

**4.** Procédé selon la revendication 1, dans lequel la fiabilité du changement de signe de la fréquence statorique ($f_s$) est vérifiée à l'aide de l'équation normée suivante :

$$\frac{|\tilde{m}|}{\hat{\gamma}^2} \cdot [1 + (\breve{n}_s + \varepsilon - |\tilde{n}|)^2] \leq 2 \cdot (|\tilde{n}| - \breve{n}_s - \varepsilon)$$

avec

$|\tilde{m}|$ = valeur absolue du couple stationnaire

$\hat{\gamma}$ = valeur absolue de flux maximale

$\breve{n}_s$ = chiffre de fréquence statorique minimal
ε = hystérésis
|nl = valeur absolue du chiffre de fréquence angulaire de rotation.

**5.** Procédé selon la revendication 1, dans lequel il y a fonctionnement générateur de la machine polyphasée lorsque le signe de la fréquence statorique ($f_s$) et de la fréquence de glissement ($f_r$) sont différents.

**6.** Procédé selon la revendication 1, dans lequel il y a fonctionnement moteur de la machine polyphasée lorsque le signe de la fréquence statorique ($f_s$) et de la fréquence de glissement ($f_r$) sont identiques.

**7.** Procédé selon la revendication 1, dans lequel il y a fonctionnement générateur de la machine polyphasée lorsque la valeur du produit des fréquences de stator et de glissement ($f_s$, $f_r$) est inférieure à zéro.

**8.** Procédé selon la revendication 1, dans lequel il y a fonctionnement moteur de la machine polyphasée lorsque la valeur du produit des fréquences de stator et de glissement ($f_s$, $f_r$) est supérieure à zéro.

**9.** Procédé selon la revendication 4, dans lequel un couple stationnaire est calculé selon l'équation normée suivante :

$$\tilde{m} = 2 \cdot \frac{\tilde{n}_r}{1 + \tilde{n}_r^2} \cdot \gamma^2$$

avec

$\tilde{n}_r$ = chiffre de fréquence de glissement stationnaire
γ = valeur absolue de flux.

**10.** Procédé selon la revendication 1, dans lequel, pendant la diminution brusque de la valeur absolue de flux (γ) d'un enchaînement de flux statorique ($\overrightarrow{\Psi}_\mu$), pour un couple positif (m), un chiffre de fréquence de glissement ($n_r$) est calculé selon l'équation suivante :

$$\tilde{n}_r = \tilde{n}_r(\hat{\gamma}) + (1 + k_\gamma) \cdot \breve{n}_s$$

avec

$\tilde{n}_r$ = chiffre de fréquence de glissement stationnaire

$\widehat{\gamma}$ = valeur absolue de flux maximale

$k_\gamma$ = facteur.

**11.** Procédé selon la revendication 1, dans lequel, pendant la diminution brusque de la valeur absolue de flux ($\gamma$) d'un enchaînement de flux statorique ($\underset{\rightarrow}{\Psi}_\mu$), pour un couple négatif (m), un chiffre de fréquence de glissement ($n_r$) est calculé selon l'équation suivante :

$$\tilde{n}_r \;=\; \tilde{n}_r \;(\widehat{\gamma}) \;-\; (1 \;-\; k_\gamma) \;\cdot\; \breve{n}_s$$

avec

$\tilde{n}_r$ = chiffre de fréquence de glissement stationnaire

$\widehat{\gamma}$ = valeur absolue de flux maximale

$k_\gamma$ = facteur.

**12.** Procédé selon la revendication 10 ou 11, dans lequel le facteur ($k_\gamma$) prend des valeurs entre - 1 et + 1.

**13.** Dispositif pour éviter un régime stationnaire d'une machine polyphasée commandée par orientation de champ et sans capteur de rotation à l'intérieur d'une plage de fréquence prédéterminée autour de la fréquence statorique ($f_s$) nulle, avec une commande séquentielle, avec une régulation de fréquence statorique (2) et avec une régulation de flux (4), dans lequel la régulation de fréquence statorique (2) est reliée côté sortie à l'entrée de la régulation de flux (4) au moyen d'un commutateur (6), dans lequel la deuxième entrée du commutateur (6) est reliée à une sortie de la commande séquentielle à laquelle se trouve une valeur absolue de flux minimale ou maximale ($\breve{\gamma}$, $\widehat{\gamma}$), dans lequel une sortie de commande de la commande séquentielle est reliée à une entrée de commande du commutateur (6) et dans lequel il y a à la sortie de la régulation de flux (4) une valeur correctrice ($k_\Psi$) pour une composante, formant le flux, d'un vecteur spatial de tension statorique.

**14.** Dispositif selon la revendication 13, dans lequel la régulation de fréquence statorique (2) comporte un comparateur (8), un régulateur proportionnel et intégral (14, 16), un additionneur (10) et un circuit limiteur (12), les deux régulateurs (14, 16) étant reliés côté entrée à la sortie du comparateur (8) et côté sortie à chaque fois à une entrée de l'additionneur (10) qui est relié côté sortie au circuit limiteur (12).

**15.** Dispositif selon la revendication 13, dans lequel la régulation de flux (4) comporte un premier comparateur (18), un régulateur de flux (20) avec circuit limiteur branché du côté aval, un multiplicateur (22), un deuxième comparateur (24) et un régulateur compensateur (26), le régulateur de flux (20) étant relié côté entrée à la sortie du premier comparateur (18) et le circuit limiteur étant relié côté sortie à une entrée du multiplicateur (22) qui est relié côté sortie à une entrée non inversée du deuxième comparateur (24) du côté aval duquel est branché côté sortie le régulateur compensateur (26), une valeur double de la valeur absolue de flux rotorique ($|\underset{\rightarrow}{\Psi}_r|$) se trouvant à la deuxième entrée du multiplicateur (22) et une valeur réelle de moment réactif rotorique ($m_{rq\Psi r}$) se trouvant à l'entrée inversée du deuxième comparateur (24) et une valeur absolue de consigne et une valeur absolue réelle de l'enchaînement de flux statorique ($\underset{\rightarrow}{\Psi}_\mu$) se trouvant aux entrées du premier comparateur (18).

FIG 1

EP 1 039 626 B1

FIG 2

**Statusabfrage**

| Sprung (Flußabbau) | Rücksprung (Flußaufbau) | Geregelter Betrieb mit $n_r \cdot n_s \geq 0$ | Geregelter Betrieb mit $n_r \cdot n_s < 0$ |
|---|---|---|---|

Sprung (Flußabbau):
Rücksprungbedingung erfüllt? ja / nein
- ja: Ende Sprung; Start Rücksprung; $\gamma = \hat{\gamma}$
- nein: $|\psi_{\to\mu}| < \breve{\gamma} + \epsilon_\gamma$ oder $n_r \cdot n_s > 0$ und $|n_s| \geq \breve{n}_s$ — nein / ja
  - nein: $\gamma = \breve{\gamma}$
  - ja: Ende Sprung

Rücksprung (Flußaufbau):
$|\psi_{\to\mu}| > \hat{\gamma} - \epsilon_\gamma$ nein / ja
- nein: $\gamma = \hat{\gamma}$
- ja: Ende Rücksprung

Geregelter Betrieb mit $n_r \cdot n_s \geq 0$:
$n_r \cdot n > 0$ ja / nein
- nein: Rücksprungbedin. erfüllt? nein / ja
  - nein: Start Rücksprung
  - ja: $\gamma = \hat{\gamma}$

Geregelter Betrieb mit $n_r \cdot n_s < 0$:
$|n_s| \leq \breve{n}_s$ nein / ja
- nein: $\gamma = \hat{\gamma}$
- ja: Start Sprung; $\gamma = \breve{\gamma}$

2 — 30 — $\gamma$ — $\gamma_{ns}$ — $\gamma$ — 4

FIG 3

EP 1 039 626 B1

$|n_s|$

8

14

16

10

12

$\hat{\gamma}^2$

$\overset{\smile}{\gamma}^2$

$\hat{\gamma}^2$

$\overset{\smile}{\gamma}^2$

$\gamma^2$

$\gamma^2_{ns}$

6

2

28

18

$\hat{n}_s$

$\psi^2_{\mu soll} = \psi^2_*$

$|\underset{\rightarrow \mu}{\psi}|^2$

4

20

22

24

26

$\hat{y}_{rq\psi r}$

$\overset{\smile}{y}_{rq\psi r}$

$y_{rq\psi r}$

$2|\underset{\rightarrow r}{\psi}|$

$m_{rq\psi r}$

$k_\psi$

FIG 4

FIG 5

FIG 6

EP 1 039 626 B1

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19703248
- DE 19646457

- DE 19532149 A1